(19) Europäisches Patentamt
European Patent Office
Office européen des brevets

(11) **EP 4 249 882 A1**

(12) **EUROPEAN PATENT APPLICATION**

(43) Date of publication:
**27.09.2023 Bulletin 2023/39**

(21) Application number: **23160944.7**

(22) Date of filing: **09.03.2023**

(51) International Patent Classification (IPC):
**G01M 11/00** (2006.01)

(52) Cooperative Patent Classification (CPC):
**G01M 11/33**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.03.2022 US 202263320761 P**

(71) Applicant: **AFL Telecommunications LLC
Duncan, SC 29334 (US)**

(72) Inventors:
• **Liu, Bin
DUNCAN, 29334 (US)**

• **Scholten, Michael
DUNCAN, 29334 (US)**
• **Prescott, Scott
DUNCAN, 29334 (US)**
• **Tanis, David
DUNCAN, 29334 (US)**
• **Farley, Dan
DUNCAN, 29334 (US)**

(74) Representative: **Serjeants LLP
Dock
75 Exploration Drive
Leicester, LE4 5NU (GB)**

(54) **APPARATUS AND METHOD FOR LOSS MEASUREMENT AND POLARITY DETECTION OF MULTI-FIBER CONNECTORS AND CABLES**

(57) An apparatus (600), controller (650), and method (1800) for polarity detection, optical insertion loss measurement, optical power measurement, fiber length measurement, and optical fiber communication is provided, configured to transmit light from a light source (310); adjust a signal parameter of the light; compare an output optical signal parameter pattern of a cabling-under-test (610) with a polarity pattern template; and determine the polarity of the cabling-under-test (610) based at least on a best-fit of the output optical signal parameter pattern to the polarity pattern template.

Fig. 6

EP 4 249 882 A1

## Description

PRIORITY STATEMENT

The present application claims the benefit of priority to U.S. Provisional Patent Application Serial No. 63/320,761, filed on March 17, 2022, the disclosure of which is incorporated by reference herein in its entirety.

FIELD

The present disclosure relates generally to optical fiber test apparatuses and test methods, and more particularly to apparatuses and methods for detecting polarity and loss measurement of multi-fiber connectors and fiber optic cables.

BACKGROUND

Light source/power meter (LSPM) methods are generally known and utilized in the fiber optics industry to measure the insertion losses of the optical fibers in fiber optic cables. Typically, a fiber optic cable under test may be connected between two test cables. One test cable is connected to a light source, and the other test cable is connected to an optical power meter. Light is transmitted from the light source through the test cables and the fiber optic cable to the power meter, and the loss in an optical fiber of the fiber optic cable is determined based on the measured power at the power meter and the power measured by referencing the light source to the power meter directly.

International standards require loss testing for both cable installation and maintenance, including multifiber optic cables, such as cables terminated by multi-fiber push-on ("MPO") connectors. An MPO connector includes MPO plugs and mating adapters. MPO plugs are attached to a multi-fiber cable, providing high density fibers termination and interconnection. Typically, the MPO connector is connected to a power meter for such testing. In some cases, the power meter has a fiber array connector port that mates with the connector.

To meet the growing demand of high-speed and high-capacity telecommunication systems and networks, parallel fiber or multi-fiber cabling systems are increasingly deployed in today's fiber optic communication infrastructures. Within a parallel fiber/multi-fiber cabling system, high counts of fibers are assembled into one small-size and compact cable package. State-of-the-art technologies can pack hundreds or thousands of fibers within a single cable, and this fiber density number is continuously improved. A typical parallel optical fiber cable is terminated and interconnected by fiber array connectors, e.g., MPO connectors.

Optical insertion loss measurement generally requires knowing the polarity of the MPO cabling under test before loss measurements may be determined. Test apparatuses including an array of light sources, such as a 1:1 quantity of light sources to test fibers, may provide quick testing by providing light to all fibers at a time. However, such apparatus and method are generally expensive, cumbersome, and may result in longer time to conduct the optical insertion loss measurement, such as longer setup time, hardware-driven testing, or user-intensive setup and testing. Test apparatuses including a single light source may be less expensive. However, such methods are generally user-intensive, requiring hardware or manual switches and changes from the light source to the test fiber, which may result in longer time to conduct the optical insertion loss measurement.

Accordingly, methods and apparatuses for improved polarity detection and optical insertion loss measurement are desired in the art. In particular, methods and apparatuses which facilitate accurate polarity detection and loss testing that require fewer light sources, are less expensive, are less cumbersome, and allow quicker measurement of MPO fibers would be advantageous.

BRIEF DESCRIPTION

Aspects and advantages of the invention will be set forth in part in the following description, or may be obvious from the description, or may be learned through practice of the invention.

An apparatus, controller, and method for polarity detection, optical insertion loss measurement, optical power measurement, fiber length measurement, and optical fiber communication is provided, configured to transmit light from a light source; adjust a signal parameter of the light; compare an output optical signal parameter pattern of a cabling-under-test with a polarity pattern template; and determine the polarity of the cabling-under-test based at least on a best-fit of the output optical signal parameter pattern to the polarity pattern template.

An aspect of the present disclosure is directed to an apparatus for polarity detection, optical insertion loss measurement, optical power measurement, fiber length measurement, and optical fiber communication. The apparatus includes a first port including a first plurality of optical fibers, the first plurality of optical fibers operably coupled to receive light from a light source; a light splitter assembly configured to split the light from the light source into the first plurality of optical fibers of the first port; a second port including a second plurality of optical fibers, the second plurality of optical fibers operably coupled to an optical power meter; a cabling-under-test operably coupling the first port and the light source to the second port and the optical power meter; a test cable operably coupling the first port to the cabling-under-test and the second port to the cabling-under-test; and a controller, the controller configured to store instructions that, when executed by one or more processing devices, performs operations, the operations including transmitting light from the light source; adjusting a signal parameter of the light; comparing an output optical signal parameter pattern of the cabling-under-test with a polarity pattern template; and determining the polarity of the cabling-under-test based at least on a best-fit of the output optical signal parameter pattern to the polarity pattern template.

Another aspect of the present disclosure is directed to a controller for an apparatus for polarity detection and optical insertion loss measurement. The controller includes one or more memory devices and one or more processing devices, the one or more memory devices storing instructions that, when executed by the one or more processors, causes the apparatus to perform operations. The operations include transmitting light from a light source; adjusting a signal parameter of the light; comparing an output optical signal parameter pattern of the cabling-under-test with a polarity pattern template; and determining the polarity of the cabling-under-test based at least on a best-fit of the output optical signal parameter pattern to the polarity pattern template.

Yet another aspect of the present disclosure is directed to a method for polarity detection. The method includes transmitting light from a light source; adjusting a signal parameter of the light; comparing an output optical signal parameter pattern of a cabling-under-test with a polarity pattern template; and determining the polarity of the cabling-under-test based at least on a best-fit of the output optical signal parameter pattern to the polarity pattern template.

Still another aspect of the present disclosure is directed to a method for determining an optical insertion loss. The method includes transmitting light from a light source; adjusting a signal parameter of the light; comparing an output optical signal parameter pattern of a cabling-under-test with a polarity pattern template; determining the polarity of the cabling-under-test based at least on a best-fit of the output optical signal parameter pattern to the polarity pattern template; and determining an optical insertion loss of each fiber at a connector.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

BRIEF DESCRIPTION OF THE DRAWINGS

A full and enabling disclosure of the present invention, including the best mode thereof, directed to one of ordinary skill in the art, is set forth in the specification, which makes reference to the appended figures.

Fig. 1A depicts an exemplary embodiment of a connector for a multi-fiber optical cable in accordance with aspects of the present disclosure;
Fig. 1B depicts an exemplary embodiment of a connector for a multi-fiber optical cable in accordance with aspects of the present disclosure;
Fig. 1C depicts an exemplary embodiment of a connector for a multi-fiber optical cable in accordance with aspects of the present disclosure;
Fig. 2A depicts an exemplary embodiment of a Type-A polarity 12-fiber multi-fiber optical cable in accordance with aspects of the present disclosure;
Fig. 2B depicts an exemplary embodiment of a Type-B polarity 12-fiber multi-fiber optical cable in accordance with aspects of the present disclosure;
Fig. 2C depicts an exemplary embodiment of a Type-C polarity 12-fiber multi-fiber optical cable in accordance with aspects of the present disclosure;
Fig. 3A depicts an exemplary embodiment of a light source side of a system for optical insertion loss measurement;
Fig. 3B depicts an exemplary embodiment of a light source side of a system for optical insertion loss measurement;
Fig. 4 depicts an exemplary embodiment of an optical power meter side of a system for optical insertion loss measurement in accordance with aspects of the present disclosure;
Fig. 5 depicts an exemplary embodiment of an apparatus for light source power meter method for optical insertion loss measurement in accordance with aspects of the present disclosure;
Fig. 6 depicts an exemplary embodiment of an apparatus for light source power meter method for optical insertion loss measurement in accordance with aspects of the present disclosure;
Fig. 7 depicts an exemplary table illustrating output power of each fiber of a source relative to a fiber position number and generated plurality of polarity templates, in accordance with embodiments of a method for polarity detection in accordance with aspects of the present disclosure;
Fig. 8 depicts an exemplary polarity pattern template including a plurality of polarity templates in accordance with embodiments of a method for polarity detection in accordance with aspects of the present disclosure;
Fig. 9 depicts an exemplary embodiment of a light source side apparatus of an apparatus for polarity detection and loss measurement in accordance with aspects of the present disclosure;
Fig. 10 depicts an exemplary embodiment of a light source side apparatus of an apparatus for polarity detection and loss measurement in accordance with aspects of the present disclosure;
Fig. 11 depicts an exemplary embodiment of a light source side apparatus of an apparatus for polarity detection and loss measurement in accordance with aspects of the present disclosure;
Fig. 12A depicts an exemplary embodiment of a light source side apparatus of an apparatus for polarity detection and loss measurement in accordance with aspects of the present disclosure;

Fig. 12B depicts an exemplary table of a reference output power level pattern corresponding to the apparatus of Fig. 12A in accordance with aspects of the present disclosure;

Fig. 13A depicts an exemplary light source output power reference pattern in accordance with aspects of the present disclosure;

Fig. 13B depicts an exemplary Type-A polarity checking template in accordance with aspects of the present disclosure;

Fig. 13C depicts an exemplary Type-B polarity checking template in accordance with aspects of the present disclosure;

Fig. 13D depicts an exemplary Type-C polarity checking template in accordance with aspects of the present disclosure;

Fig. 13E depicts an exemplary Type-B 8-fiber polarity checking template in accordance with aspects of the present disclosure;

Fig. 13F depicts an exemplary Type-B 10-fiber polarity checking template in accordance with aspects of the present disclosure;

Fig. 14A depicts an exemplary chart of optical insertion loss versus fiber number in accordance with aspects of the present disclosure;

Fig. 14B depicts an exemplary chart of cabling-under-test power compared to output power reference in accordance with aspects of the present disclosure;

Fig. 14C depicts an exemplary table of calculated correlation coefficients in accordance with aspects of the present disclosure;

Fig. 15A depicts an exemplary embodiment of a light source side apparatus of an apparatus for polarity detection and loss measurement in accordance with aspects of the present disclosure;

Fig. 15B depicts an exemplary table of a reference output power level pattern corresponding to the apparatus of Fig. 15A in accordance with aspects of the present disclosure;

Fig. 16A depicts an exemplary embodiment of a light source side apparatus of an apparatus for polarity detection and loss measurement in accordance with aspects of the present disclosure;

Fig. 16B depicts an exemplary table illustrating a numerical data series representing a digital signature of output optical signal of each fiber of a source relative to a fiber position number and polarity templates in accordance with embodiments of a method for polarity detection in accordance with aspects of the present disclosure;

Fig. 17 depicts an exemplary table of calculated correlation coefficients corresponding to the apparatus of Fig. 16A in accordance with aspects of the present disclosure;

Fig. 18A depicts a flowchart outlining steps of a method for polarity detection in accordance with aspects of the present disclosure;

Fig. 18B depicts a flowchart outlining steps of a method for polarity detection in accordance with aspects of the present disclosure;

Fig. 18C depicts a flowchart outlining steps of a method for polarity detection in accordance with aspects of the present disclosure;

Fig. 19 depicts a flowchart outlining steps of a method for optical insertion loss measurement in accordance with aspects of the present disclosure;

Fig. 20 depicts an exemplary embodiment of a light source side apparatus of an apparatus for polarity detection, optical power and loss measurement, length measurement, and over-the-fiber communications in accordance with aspects of the present disclosure;

Fig. 21 depicts an exemplary embodiment of an optical power meter side apparatus of an apparatus for polarity detection, optical power and loss measurement, length measurement, and over-the-fiber communications in accordance with aspects of the present disclosure;

Fig. 22 depicts an exemplary embodiment of a light source side apparatus of an apparatus for polarity detection, optical power and loss measurement, length measurement, and over-the-fiber communications in accordance with aspects of the present disclosure;

Fig. 23 depicts an exemplary embodiment of a light source side apparatus of an apparatus for polarity detection, optical power and loss measurement, length measurement, and over-the-fiber communications in accordance with aspects of the present disclosure;

Fig. 24 depicts an exemplary embodiment of an optical power meter side apparatus of an apparatus for polarity detection, optical power and loss measurement, length measurement, and over-the-fiber communications in accordance with aspects of the present disclosure;

Fig. 25 depicts an exemplary embodiment of a light source side apparatus of an apparatus for polarity detection, optical power and loss measurement, length measurement, and over-the-fiber communications in accordance with aspects of the present disclosure;

Fig. 26 depicts an exemplary embodiment of an optical power meter side apparatus of an apparatus for polarity detection, optical power and loss measurement, length measurement, and over-the-fiber communications in accordance with aspects of the present disclosure; and

Fig. 27 depicts an exemplary embodiment of an optical power meter side apparatus of an apparatus for polarity detection, optical power and loss measurement, length measurement, and over-the-fiber communications in accordance with aspects of the present disclosure.

DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

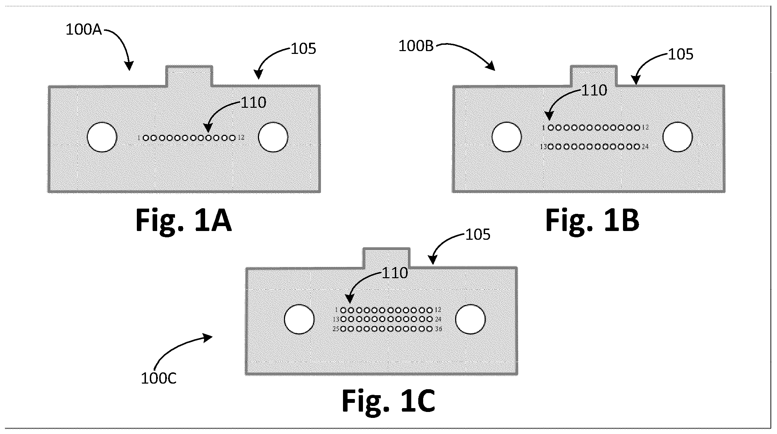

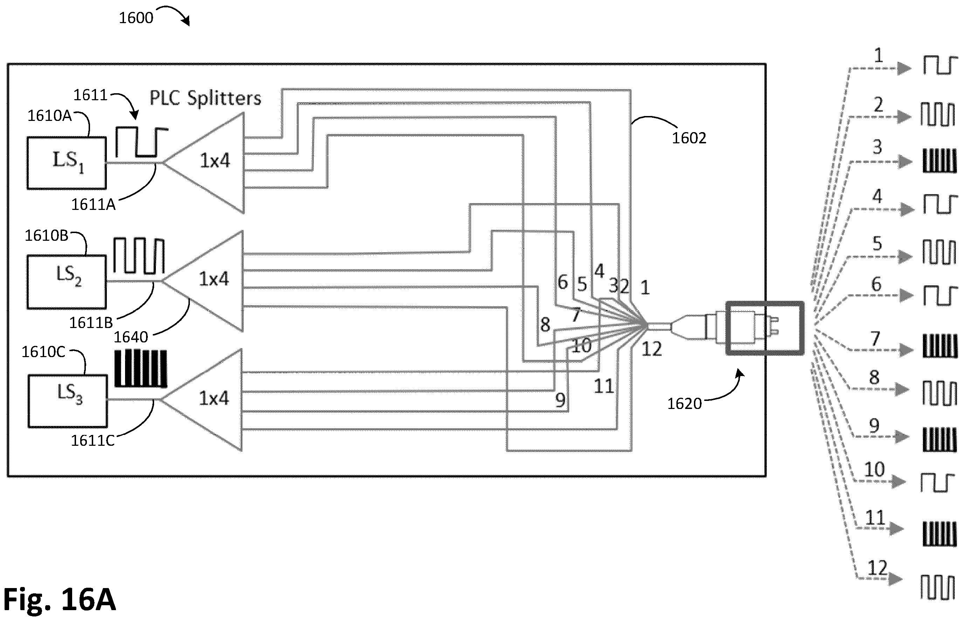

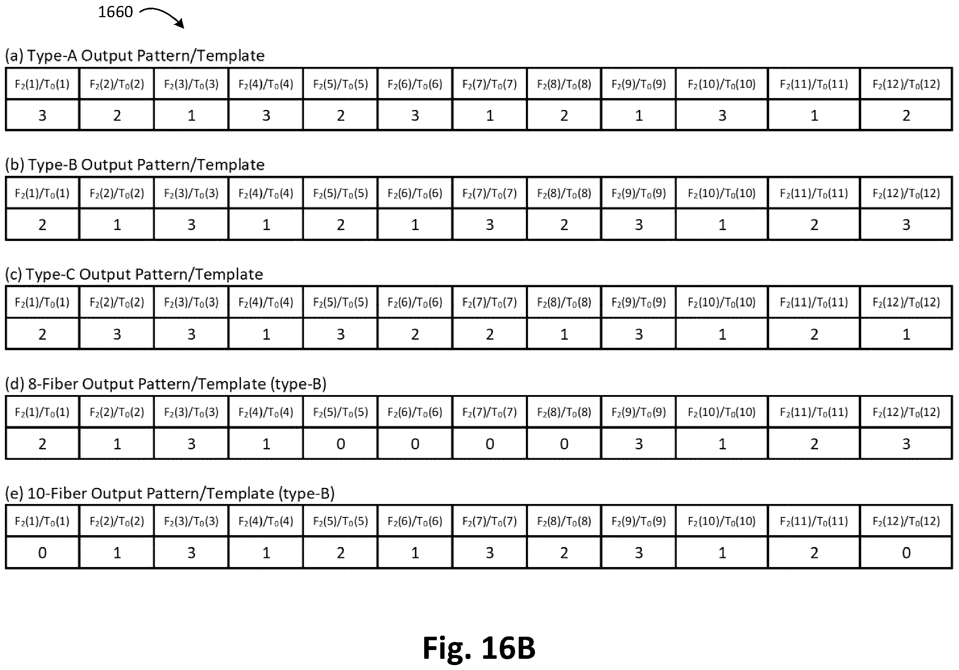

Figs. 1A, 1B, and 1C depict exemplary multi-fiber connectors 100A, 100B, 100C for use to attach to a multi-fiber optical cable, such as for providing high density fibers termination and interconnection. The exemplary embodiments may particularly form multi-fiber push-on (MPO) connectors for a fiber optic cable. The plugs or connectors are keyed and use a ferrule 105. The ferrule 105 may include a rectangular plastic body, or other appropriate geometry or cross section of ferrule. Accordingly, the present disclosure is not limited to any particular material or geometry of ferrule. The ferrule 105 includes an interface 110 that may be either pinned, or unpinned forming openings. The pins and corresponding openings of plugs align fibers of the multi-fiber cable. An adapter may generally be used for joining plugs (e.g., two MPO plugs) and holding them in a fixed position. The fiber positions in a plug can be arranged in one or more rows. Commonly, there are 12-fiber position arrangements, such as depicted in Figs. 1A-1C or 16-fiber position arrangements per row. However, it should be appreciated that the present disclosure is not limited to any particular type of fiber position arrangement.

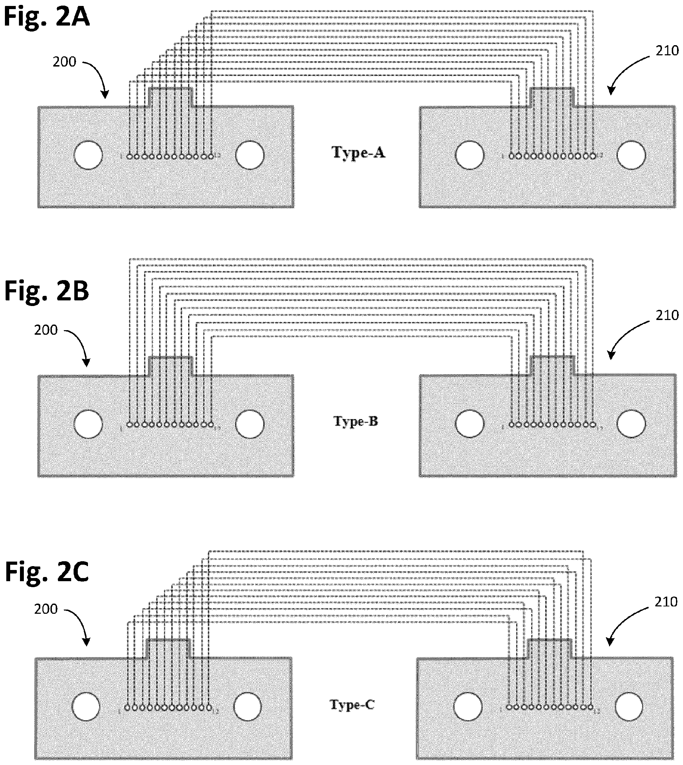

When viewing the plug end in the key up position, the fiber number generally starts on the left side and increases toward the right side. Fiber polarity is important in fiber communications to ensure that transmitters are correctly connected to receivers. To properly manage the fiber connectivity and correctly maintain the fiber route traceability within a parallel fiber/multi-fiber system, fiber positions between two end plugs of a multi-fiber optical cable normally use one of several standardized position patterns, generally referred to as polarities, such as depicted and described in regard to Figs. 2A-2C.

Referring now to Figs. 2A, 2B, and 2C, exemplary embodiments of several standardized position patterns are provided for a 12-fiber multi-fiber optical cable, such as the connector provided in Fig. 1A. Fig. 2A depicts a Type-A multi-fiber optical cable polarity in which fiber positions are in consecutive arrangement (i.e., 1, 2, 3, 4, ... 12) within the plug at both ends of the cable, such as at both of a first plug 200 and a second plug 210. Fig. 2B depicts a Type-B multi-fiber optical cable polarity in which fiber positions are in consecutive arrangement at the first plug 200 (i.e., at one end) and are in reverse consecutive arrangement (i.e., 12, 11, 10, 9, ... 1) at the second plug 210 (i.e., at the other end). Fig. 2C depicts a Type-C multi-fiber optical cable polarity in which fiber positions are in consecutive arrangement at the first plug 200 and are pair-wise flipped within the second plug 210 (i.e., 2, 1, 4, 3, 6, 5, 8, 7, 10, 9, 12, 11). A Type-A (Fig. 2A) or Type-C (Fig. 2C) cabling system may generally use Type-A adapters (e.g., key-up to key-down) to join the same type of cables or breakout cables to maintain the same polarity throughout the system. A Type-B (Fig. 2B) cabling system may generally use Type-B adapter (e.g., key-up to key-up) to maintain the same polarity throughout the system.

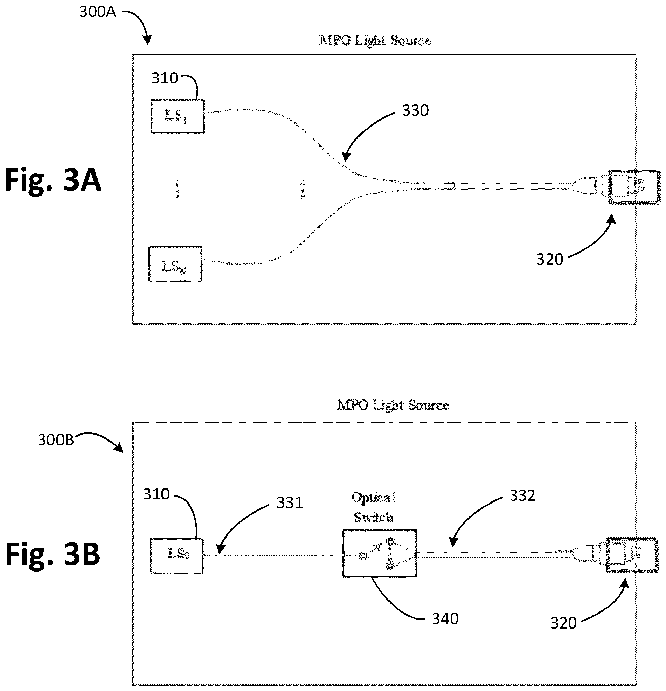

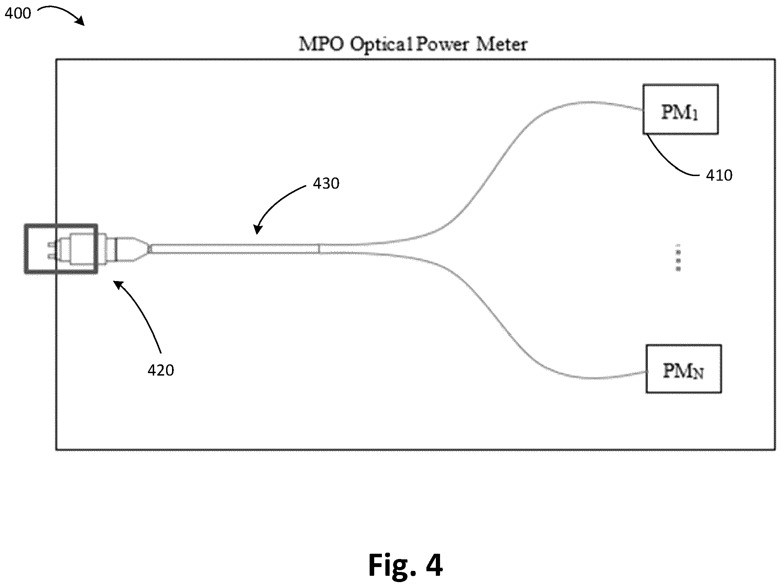

Referring now to Figs. 3A-3B and Fig. 4, embodiments of a system for optical insertion loss measurement are provided. Optical insertion loss measurements on each fiber of a connector or parallel cabling system are critical to certify a newly installed fiber optic system, or for maintaining operation of a fiber optic system. Embodiments of the system are configured to perform a light source power meter (LSPM) method for optical insertion loss measurement. Referring to Figs. 3A-3B, a source side 300A, 300B of the system includes a light source (LS) unit 10 including a first port (hereinafter, "first port 320'). The first port 320 is configured such as depicted and described in regard to Figs. 1A-1C. In the exemplary embodiment, first port 320 is configured as a Type-A polarity. However, other embodiments may have other polarity configurations. Referring to Fig. 4, a power meter side 400 of the system includes an optical power meter (PM) unit 410 including an OPM side port 420 (hereinafter, "second port 420"). The embodiment depicted in Fig. 4 includes an array of optical power meters 410, denoted as $PM_1$ to $PM_N$, including a fanout fiber 430 to connect the second port 420 to the plurality of power meters 410. Generally, the fiber linkage between the second port 420 and the fiber pigtailed OPM unit 410 may be configured as a Type-A polarity. For instance, fiber position number 1 is connected to the first position at the OPM side port, fiber position number 2 is connected to the second position at the OPM side port, etc. However, other embodiments may have other polarity configurations.

Referring to Fig. 3A, an embodiment of the light source side 300A includes a fanout fiber 330 operably coupled to the first port 320. The fanout fiber 330 is operably coupled or linked to a respective light source 310, denoted as $LS_1$ to $LS_N$, of the plurality of light sources. Various embodiments of the light source 310 may include laser diodes, light emitting diodes (LED), or other appropriate light source apparatuses. The light source 310 may operate in single, dual, or multiple wavelengths (e.g., 1310 nm and 1550 nm).

Referring to Fig. 3B, another embodiment of the light source side 300B includes an optical switch 340 positioned in operable arrangement between the light

source 310 ($LS_0$) and the first port 320. The optical switch 340 may be configured as a 1 × N optical switch operable to connect the single light source 310 ($LS_0$) and a single fiber 331 from the light source 310 to one of a plurality of optical fibers 332 at the first port 320 and to switch between the plurality of optical fibers 332. While the embodiment in Fig. 3B requires only the single light source 310, the light source 310 is limited to lighting one fiber 332 at a time. While such an embodiment may be less expensive and cumbersome than utilizing a plurality of light sources, utilizing a single light source may result in longer time to conduct the optical insertion loss measurement.

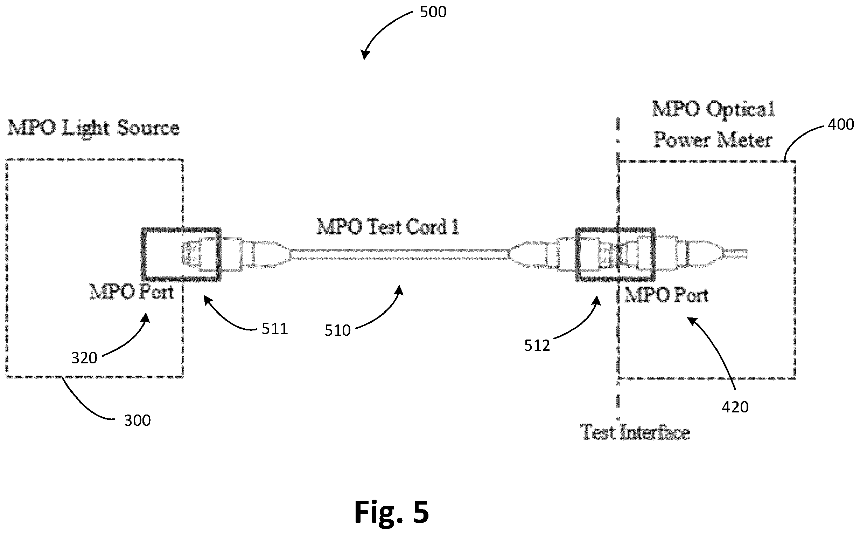

Referring now to Figs. 5-6, depictions of an apparatus for LSPM method for optical insertion loss measurement are illustrated (hereinafter, "apparatus 500"). The apparatus 500 may particularly obtain optical power meter references, such as will be utilized in embodiments of methods for polarity detection and insertion loss measurement provided herein. In Fig. 5, a light source side 300, such as further described in various embodiments herein, is connected to an optical power meter side 400, such as described in regard to Fig 4. A first test cable or test cord 510 is connected to the first port 320 at the light source side 300. The light source side 300 is connected to second port 420 at the optical power meter side 400 through a first test cord 510 (Test Cord 1). The polarity of the connectors of the light source port 511 and the first test cord 510 may typically be configured as Type-A, such as depicted and described in regard to Fig. 2A. Accordingly, the fiber position is in a consecutive arrangement of 1, 2, 3, 4, ... N. For embodiments provided herein, an exemplary 12-fiber multi-fiber optical cable will be utilized. The exemplary 12-fiber cable may include MPO connectors, cables, and appropriate interfaces. However, as provided above, any desired fiber count cable and connector may be utilized. Additionally, any appropriate type of multi-fiber connector and cabling interface may be utilized. The light source 310 at the light source side 300 injects test light into each fiber. The output power from each fiber position in a distal end plug 512 connected at the optical power meter side 400 is measured and recorded as references, such as $P_1(n)$ in power units of dBm, in which "n" represents the fiber position number within the distal end plug 512.

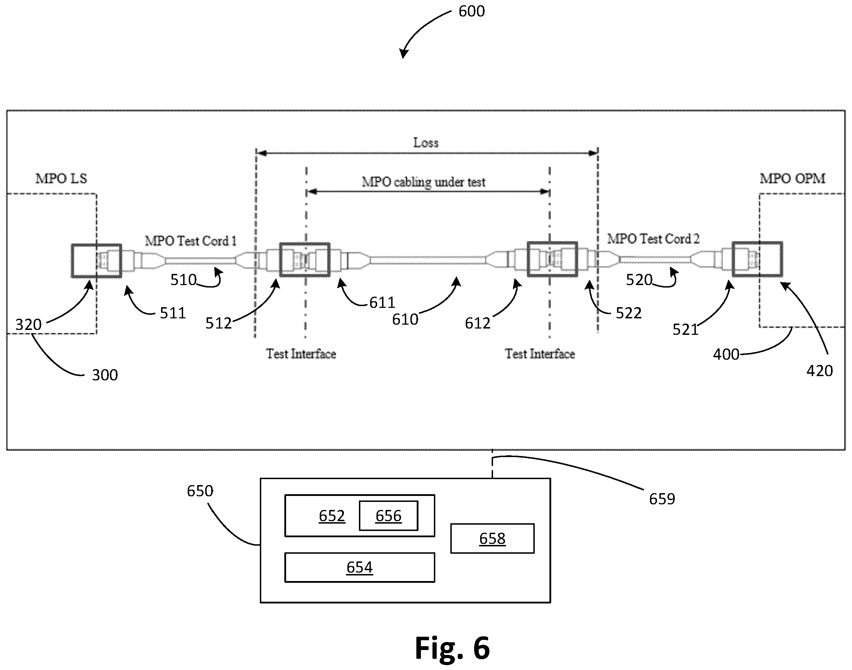

In Fig. 6, an apparatus for optical insertion loss measurement is provided (hereinafter, "apparatus 600"). The first test cord 510 as described in regard to apparatus 500 is disconnected from the optical power meter side 400 of apparatus 500 and connected to a cabling under test (CUT) 610, such as at plug 611 of the CUT 610. A second test cable or test cord 520 (Test Cord 2) is connected to a distal end plug 612 of the CUT 610 and the optical power meter (OPM) side 400. The output power of each fiber of the CUT 610 is measured and recorded (e.g., in power units of dBm). The output power is denoted as $P_2(m)$, in which "m" represents the fiber position number within the distal-end plug. The fiber position "m" depends on the polarity of the CUT 610. For instance, for a 12-fiber multi-fiber optical cable, if the CUT is Type-A, "m" is in a consecutive arrangement of 1, 2, 3, 4, ... 12. If the CUT is Type-B, "m" is in a reverse consecutive arrangement of 12, 11, 10, 9, ... 1. If the CUT is Type-C, "m" is the pair-wise flipped arrangement of 2, 1, 4, 3, 6, 5, 8, 7, 10, 9, 12, 11.

The insertion losses (IL) of the cabling under test (CUT) are calculated as $IL_{n-m} = P_1(n) - P_2(m)$ (dB).

When the CUT is Type-A, the cabling will be tested and recorded as $IL_{1-1}$, $IL_{2-2}$, $IL_{3-3}$, $IL_{4-4}$ ... $IL_{12-12}$.

When the CUT is Type-B, the cabling will be tested and recorded as $IL_{1-12}$, $IL_{2-11}$, $IL_{3-10}$, $IL_{4-9}$ ... $IL_{12-1}$.

When the CUT is Type-C, the cabling will be tested and recorded as $IL_{1-2}$, $IL_{2-1}$, $IL_{3-4}$, $IL_{4-3}$ ... $IL_{11-12}$, $IL_{12-11}$.

Accordingly, the polarity of the CUT must be known or tested prior to loss insertion measurement. Apparatuses such as depicted and described in Figs. 3A-3B may be utilized to determine the polarity. For instance, in Fig. 3A, all fibers may be lit simultaneously and each light source may emit a unique pulse pattern corresponding to a specific fiber identifier. However, as provided above, such an apparatus may be expensive and cumbersome, such as due to the plurality of light sources required. In Fig. 3B, a single light source may individually light each fiber, and the power meter may detect the lit fiber and its position, allowing the user to know the polarity. However, as provided above, such apparatus may be time-consuming and cumbersome to switch between individual fibers.

Embodiments of the apparatus provided herein may include a computing device, such as a controller 650. The controller may include one or more memory devices 652 and one or more processing devices 654. The processing device 654 may be configured as microprocessors, CPUs, or the like, such as general or special purpose microprocessors operable to execute programming instructions or micro-control code associated with operation of the power meter, the light source, or the apparatus generally. The memory device 652 may include any appropriate nonvolatile memory device, including, but not limited to, flash memory storage devices, solid-state drives, disk storage devices, optical disks, hard disk drives, floppy disks, magnetic tape, various configurations of read-only memory (ROM), various types of random access memory (RAM), or combinations thereof. The memory device 652 may additionally, or alternatively, include any appropriate type of volatile memory device. The processor device 654 is configured to execute programming instructions 656 stored in the memory device 652. The memory device 652 can be a separate component from the processor device 654 or can be included onboard within the processor device 654. Alternatively, the controller 650 may be constructed without using a microprocessor, e.g., using a combination of discrete analog and/or digital logic circuitry (such as switches, amplifiers, integrators, comparators, flip-flops, AND gates, and the like) to perform control functionality instead of relying upon software. The controller 650 may include any appropriate analog or digital configuration, or a combination thereof, such as, but not limited to, analog-to-digital converters (A/D or ADC), digital-to-analog converters (D/A or DAC), or any other appropriate apparatuses for control or interface with the light source 310 and the optical power meter 410.

The controller 650 may store one or more steps of the method for polarity detection and optical insertion loss measurement as instructions 656 at the memory device 652. The instructions 656, when executed by one or more processor devices 654, may cause apparatuses for optical insertion loss measurement and polarity detection to perform operations, such as provided in one or more steps of the methods provided herein. Instructions, data, commands, references, etc. may communicate through a wired or wireless bus 659 via a communications module 658 between the controller 650 and other components of the apparatus 600, such as the light source, the optical power meter, or control elements thereof. The communications module 658 includes any appropriate device for wired or wireless communications.

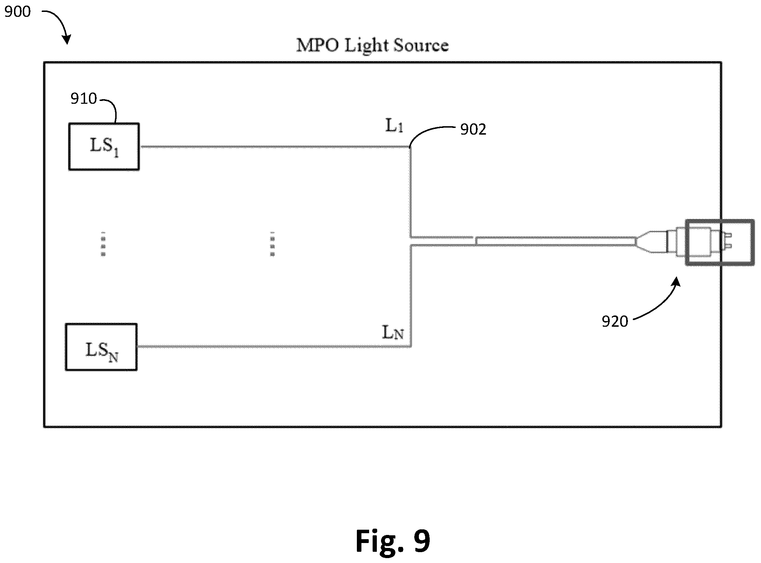

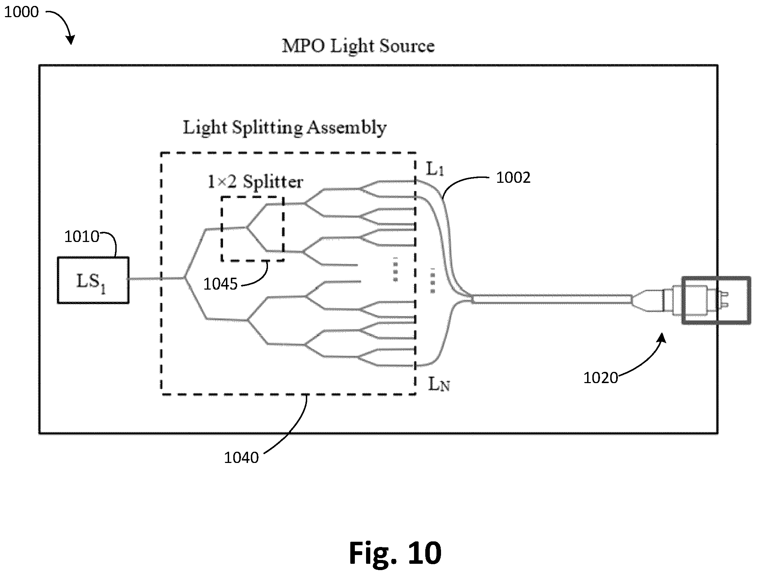

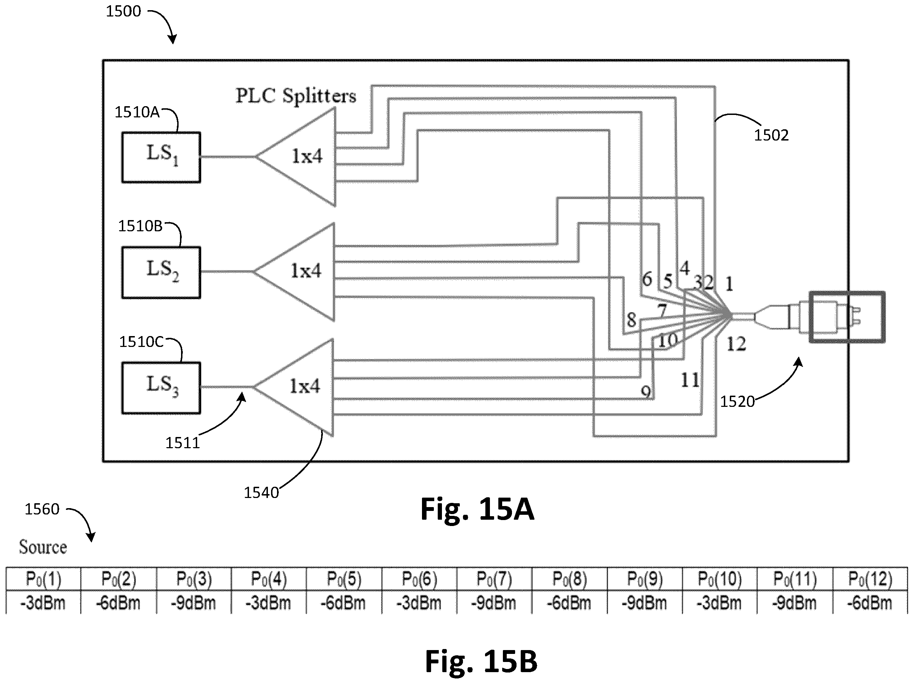

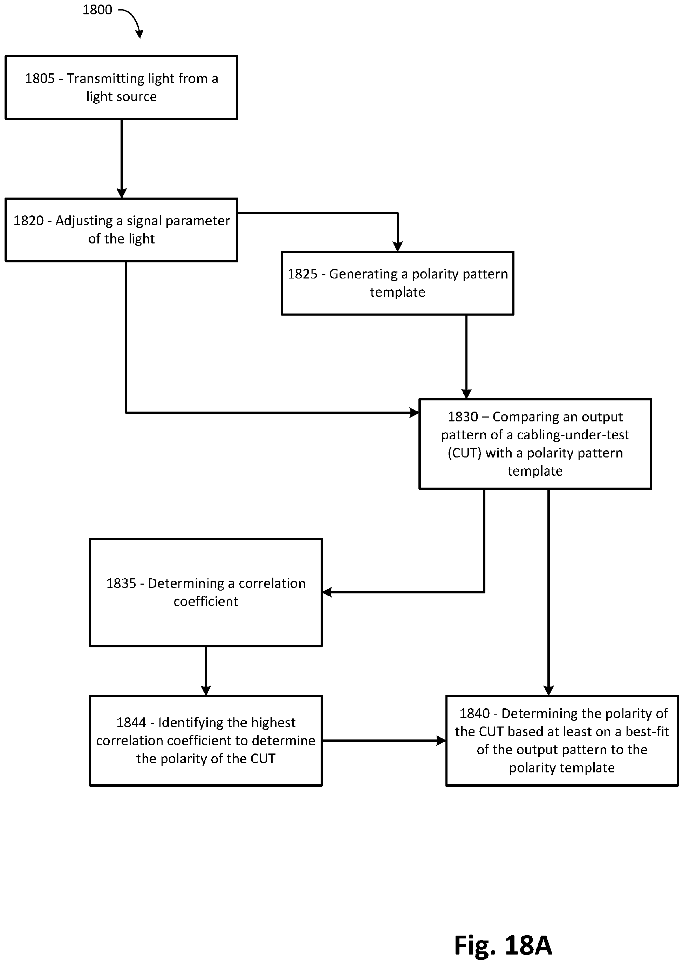

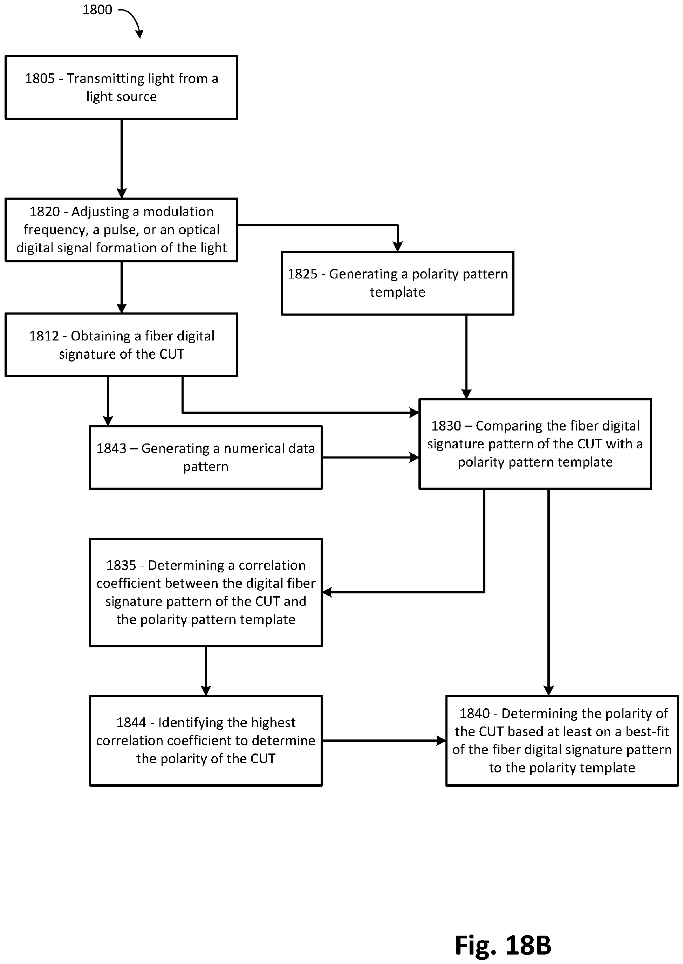

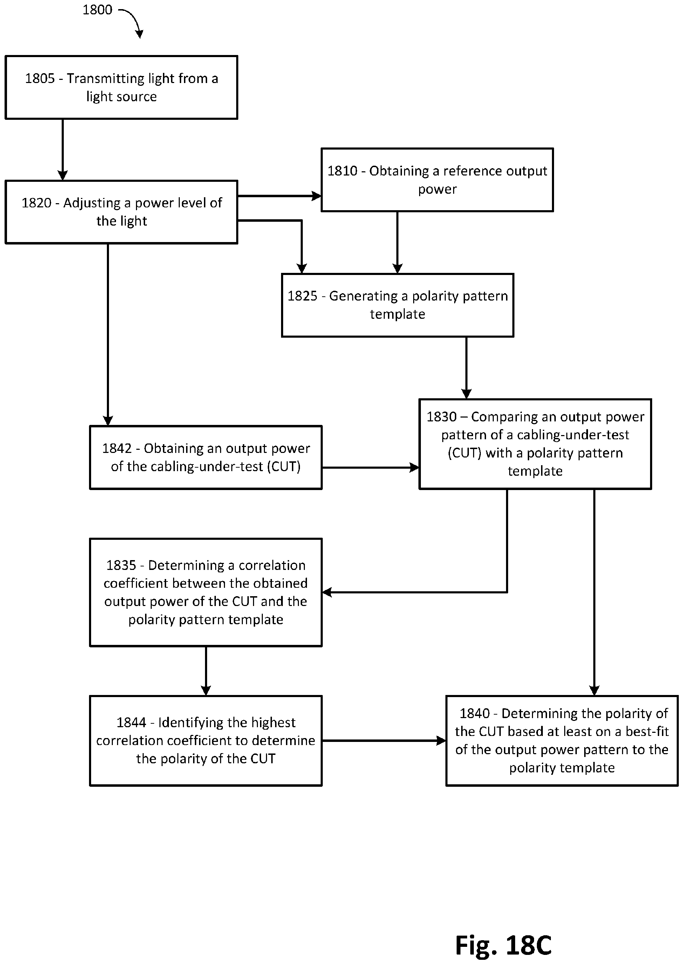

Embodiments of a method for polarity detection (hereinafter, "method 1800") are provided herein, such as outlined in the flowchart provided in Figs. 18A, 18B, and 18C. Embodiments of the method 1800 include at 1805 transmitting light from a light source and at 1820 adjusting a signal parameter of the light. Adjusting the signal parameter of the light may include, but is not limited to, adjusting the amplitude of the light, adjusting the wavelength of the light, adjusting the power of the light, adjusting the frequency of the modulated light, or adjusting the repetition rate of the pulsed light, etc., or combinations thereof. In certain embodiments, adjusting the signal parameter includes an analog configuration of optically adjusting a power level or amplitude of the light split by the splitter. In other embodiments, adjusting the signal parameter includes a digital configuration of electronically adjusting a modulation frequency, a pulse repetition rate, or an optical digital signal formation of the light split by the splitter. In various embodiments, adjusting the signal parameter may include optically or electronically adjusting a power level, a modulation frequency, a pulse repetition rate, or an optical digital signal formation of the light split by the splitter. In certain embodiments, electronic or optical adjustment includes an electro-optic (E-O) modulator configured to modulate a phase, frequency, amplitude, or polarization of a beam of light. The method 1800 may include transmitting light from a single light source, such as depicted in accordance with the apparatus of Figs. 10, 11, and 12A. However, it should be appreciated that the method 1800 may be performed via a plurality of light sources, such as depicted with the apparatus of Figs. 9, 15A, and 16A, 20-27. It should be appreciated that particular embodiments, such as depicted in Figs. 15A and 16A, the method 1800 may allow for greater than 1:1 ratio (i.e., each light source provides a plurality of output power levels to multiple fibers) of light sources to fibers, such as further described herein. In particular embodiments, method 1800 may include transmitting light from three (3) light sources, such as described further herein.

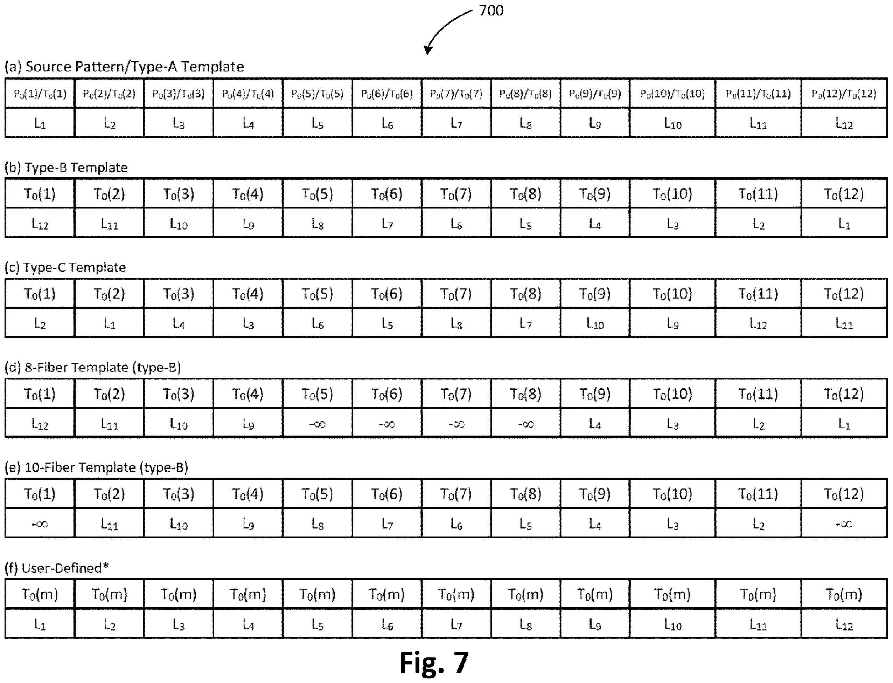

When light is transmitted from the light source to a cabling under test (CUT) for optical loss insertion testing, such as depicted in the apparatus of Fig. 6, the measured optical signal parameter of the cabling at the OPM side, such as an output power level pattern or fiber digital signature pattern, may be different from a pattern at the light source side, such as, e.g., due to different polarities that a CUT may have. The power level may be attenuated due to losses at the CUT. The method 1800 may particularly include the output power level pattern being altered by the polarity of the CUT, such as outlined in flowchart 1800 at Fig. 18C. Fig. 7 depicts a table 700 illustrating the output power $P_0(n)$ of each fiber of the source, in which "n" represents the fiber position number and each output power is set to a unique level, e.g., $L_1$ through $L_{12}$. When losses at the CUT are assumed as zero, a polarity-specific output pattern template $T_0(n)$ may be generated based on $P_0(n)$. The output power level pattern template of a Type-A CUT will be the same as the source pattern, such as depicted at row a in Fig. 7; the output power level pattern template of a Type-B CUT will have an inverse pattern, such as depicted at row b in Fig. 7; the output power level pattern template of a Type-C CUT will have a pair-wise flipped pattern, such as depicted at row c in Fig. 7; the output power level pattern template of an 8-fiber cable is generally a Type-B pattern, except with the absence of the middle four fibers (where $-\infty$ represents no power), such as depicted at row d in Fig. 7; and the output power level pattern template of a 10-fiber cable may be a Type-B pattern, except with the absence of the first and last two fibers, such as depicted at row e in Fig. 7. Row f of Fig. 7 depicts a user-defined polarity pattern template with a user-desired fiber position linkage of the CUT, where "m" represents the fiber position number defined by a user within the distal-end plug of a CUT, such as described in regard to Fig. 6.

The method 1800 includes at 1830 comparing an output optical signal parameter pattern with a polarity pattern template. In certain embodiments, such as depicted in Fig. 18C, the method 1800 at 1830 includes comparing an output power pattern (e.g., $P_2(n)$) of a cabling-under-test with a polarity pattern template. In still certain embodiments, such as depicted in Fig. 18B, the method 1800 at 1830 includes comparing a fiber digital signature pattern of the cabling-under-test with a polarity pattern template. The method 1800 includes at 1840 determining the polarity of the CUT based at least on a best-fit of the output optical signal parameter pattern to a polarity template. In certain embodiments, the method 1800 at 1840 includes determining the polarity of the CUT based at least on a best-fit of the output power pattern to a polarity template. In another embodiment, the method 1800 at 1840 includes determining the polarity of the CUT based at least on a best-fit of the fiber digital signature pattern to a polarity template.

In certain embodiments, the method 1800 includes at 1825 generating a polarity-specific template or data series ($T_0(n)$) based at least on a reference data series ($P_1(n)$), such as described in regard to Fig. 5. The method 1800 may include at 1835 determining a correlation coefficient between the output power data series ($P_2(n)$) and the polarity-specific data series ($T_0(n)$). An exemplary algorithm is as follows:

$$ R = \frac{\sum_{i=1}^{N}[P_2(i) - \overline{P_2}] \times [T_0(i) - \overline{T_0}]}{\sqrt{\sum_{i=1}^{N}[P_2(i) - \overline{P_2}]^2}\ \sqrt{\sum_{i=1}^{N}[T_0(i) - \overline{T_0}]^2}} $$

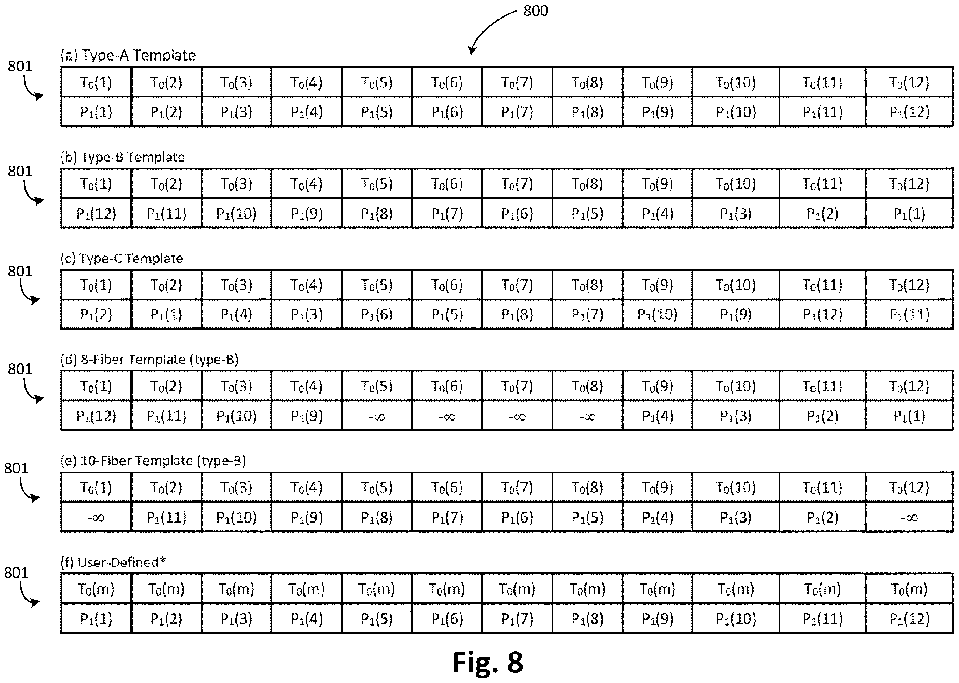

$\overline{P_2}$ and $\overline{T_0}$ represent the mean of the corresponding series. R may vary -1 to +1, in which +1 corresponds to the two data series being perfectly correlated; 0 corresponds to the two data series being completely unrelated; and -1 corresponds to perfect opposite correlation. The best fit among the calculated correlation coefficients corresponds to the highest value R and indicates the matching polarity (i.e., such as described in regard to Fig. 7). Fig. 8 depicts an exemplary polarity pattern template 800 based on reference data series ($P_1(n)$). The depiction in Fig. 8 is substantially similar to Fig. 7. However, the polarity pattern template 800 depicted in Fig. 8 is based on reference power $P_1(n)$. The embodiment depicted in Fig. 8 includes a plurality of polarity templates 801 depicted at each row a-f. Using reference power pattern $P_1(n)$ for generating polarity templates may advantageously improve the polarity detection rate relative to using source power pattern $P_0(n)$.

Referring now to Fig. 18C, in certain embodiments, the method 1800 includes at 1810 measuring, determining, or otherwise obtaining a reference power output from each fiber position. In still certain embodiments, the method at 1810 includes obtaining a reference power output and an output power of the cabling-under-test. Obtaining the reference power output may be performed such as described above regarding reference optical power meter $P_1(n)$. An apparatus, such as depicted in Figs. 5-6, may be utilized to measure the reference power output. In various embodiments, reference power outputs may be stored, received, or accessed as a lookup table, schedule, chart, table, graph, database, or other accessible or transmittable stored data. The method 1800 includes at 1825 generating a polarity-specific output power pattern template or data series ($T_0(n)$), such as described regarding Fig. 7-8. The method 1800 at 1840 may include at 1842 measuring, determining, or otherwise obtaining the output powers ($P_2(n)$) of the CUT, such as described herein. The method 1800 at 1835 calculates or otherwise determines the correlation coefficient between the output power data series ($P_2(n)$) and the polarity-specific data series ($T_0(n)$). The method 1800 may include at 1844 identifying the highest correlation value to determine the polarity of the CUT.

Referring now to Fig. 18B, in certain embodiments, the method 1800 includes at 1812 measuring, determining, or otherwise obtaining a fiber digital signature of the cabling-under-test (CUT), i.e., the output fiber digital signature pattern of the CUT. An apparatus, such as depicted and described in regard to Fig. 6 and Fig. 16A herein, may be utilized to obtain the fiber digital signature of the CUT. The method includes at 1843 generating a numerical data series. In a particular embodiment, the method 1800 at 1843 includes generating a numerical data pattern corresponding to the polarity pattern template generated at 1825. The method at 1843 may generate the numerical data series ($F_2(n)$) to represent the measured output pattern of the CUT, such as exemplary output patterns depicted and described by table 1660 in regard to Fig. 16B herein. In table 1660, "n" represents the fiber position number. The apparatus depicted in Fig. 16A distributes three (3) distinct fiber digital signatures to fibers 1602 of port 1620. Port 1620 may be configured substantially as the first port 320 such as described regarding Fig. 6. Three (3) distinct numbers (e.g., "1", "2" and "3") may represent the three (3) fiber digital signatures in output pattern data series such as depicted in table 1660. Number "0" may generally represent an absent fiber or a fiber without fiber digital signature detected. The method also includes at 1825 generating digital signature polarity templates. The polarity templates, such as the numerical data series $T_0(n)$, may be generated based on the source digital signature pattern numerical data series at port 1620 which may be configured substantially similar as the first port 320 such as described regarding Fig. 5. In a digital apparatus such as described herein, the method 1800 at 1835 determines the correlation coefficient between the obtained digital fiber signature pattern of the CUT and the polarity pattern template. An exemplary algorithm is as follows:

$$ R = \frac{\sum_{i=1}^{N}[F_2(i) - \overline{F_2}] \times [T_0(i) - \overline{T_0}]}{\sqrt{\sum_{i=1}^{N}[F_2(i) - \overline{F_2}]^2}\ \sqrt{\sum_{i=1}^{N}[T_0(i) - \overline{T_0}]^2}} $$

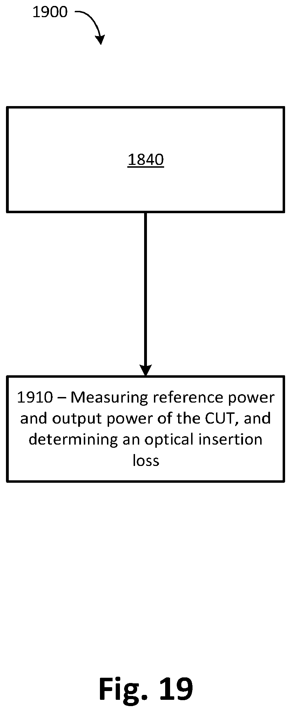

Embodiments of a method for measuring or otherwise determining optical insertion losses (hereinafter, "method 1900") are provided herein, such as outlined in the flowchart provided in Fig. 19. The method 1900 may include one or more steps of method 1800 for determining polarity. Method 1900 may further include at 1910 measuring reference power (e.g., $P_1(n)$) and output power of a cabling-under-test (e.g., $P_2(m)$), and calculating or otherwise determining optical insertion losses of each fiber of the cable ($IL_{n-m}$), such as described above.

Referring now to Fig. 9, an exemplary embodiment of an apparatus 900 for polarity detection and loss measurement is provided. The apparatus 900 particularly depicts an embodiment of the light source side of a test apparatus, such as an embodiment of light source side 300 of apparatus 500, 600 (Figs. 5-6). The apparatus 900 provided in Fig. 9 may be configured substantially similarly as the light source side 300A depicted and described in Fig. 3A, in which light is distributed from light source 910 through respective fiber 902. The embodiment depicted in Fig. 9 includes N quantity of light sources (LS) 910, in which N is the maximum fiber position number of the port 920. Each light source 910 may operate for single, dual, or multiple wavelengths (e.g., 1310 nm and 1550 nm). The controller 650 (Fig. 6) is configured to generate an output power level of each light source 910 in accordance with the method 1800. In the embodiment depicted in Fig. 9, the apparatus 900 may advantageously execute a more flexible software-based method for determining polarity, such as stored as instructions 658 at the controller 650 (Fig. 6), in contrast to a hardware-based or user-intensive approach.

Referring now to Fig. 10, an exemplary embodiment of a light source side 1000 of an apparatus for polarity detection and loss measurement is provided. The apparatus 1000 particularly depicts an embodiment of the light source side of a test apparatus, such as an embodiment of light source side 300 of apparatus 500, 600 (Figs. 5-6). The apparatus 1000 includes a single light source 1010 that may be configured for single, dual, or multiple wavelengths, such as described above. A light splitting assembly 1040 is configured to distribute light to N quantity of fibers 1002, in which N is the maximum fiber position number of the connector 1020. Accordingly, light from the single light source 1010 is split into N portions and distributed to individual fibers 1002 of the connector 1020. The light splitting assembly 1040 may include an optical, frequency, or wavelength splitter, coupler, or branching device 1045. In certain embodiments, the light splitting assembly 1040 is any appropriate quantity of splitters, couplers, or branching devices 1045. In an exemplary embodiment, the apparatus 1000 is configured to provide up to 3dBm (2mW) from the single light source 1010 to distribute to each fiber 1002 of the connector 1020. Approximately -8dBm of power can be distributed to each fiber, which may be sufficient for relatively long-distance tests.

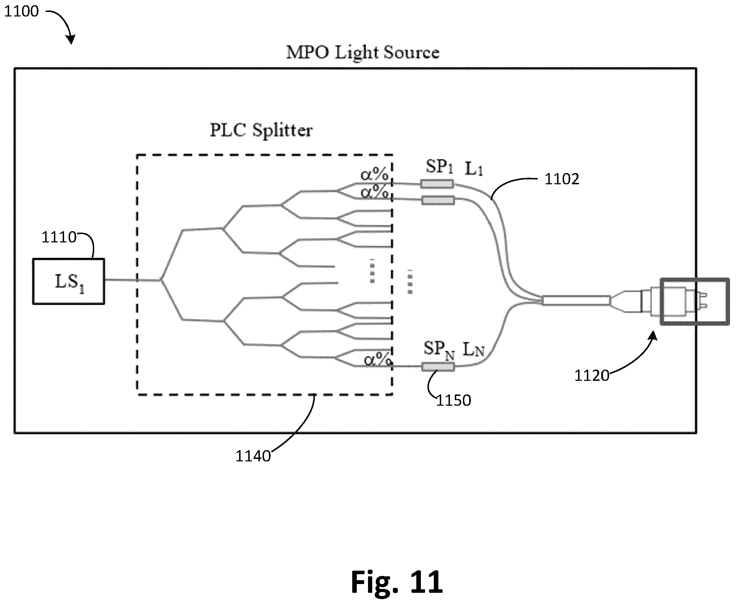

Referring now to Fig. 11, an exemplary embodiment of a light source side 1100 of an apparatus for polarity detection and loss measurement is provided. The apparatus 1100 provided in Fig. 11 may be configured substantially similarly as the apparatus 1000 described in regard to Fig. 10. The apparatus 1100 particularly includes a planar light circuit (PLC) splitter 1140. PLC splitters 1140 may generally be configured with substantially even splitting ratios and are relatively compact in size relative to other splitter configurations. A fiber splice (SP) 1150 is positioned at and operably coupled to a plurality of the fibers 1102. Each fiber splice 1150 is configured with a predetermined insertion loss. Power levels from the light source 1110 may be substantially similar from the light source 1110 and through the PLC splitter 1140. However, the fiber splice 1150 may generate sufficient distinguishability between the polarity templates.

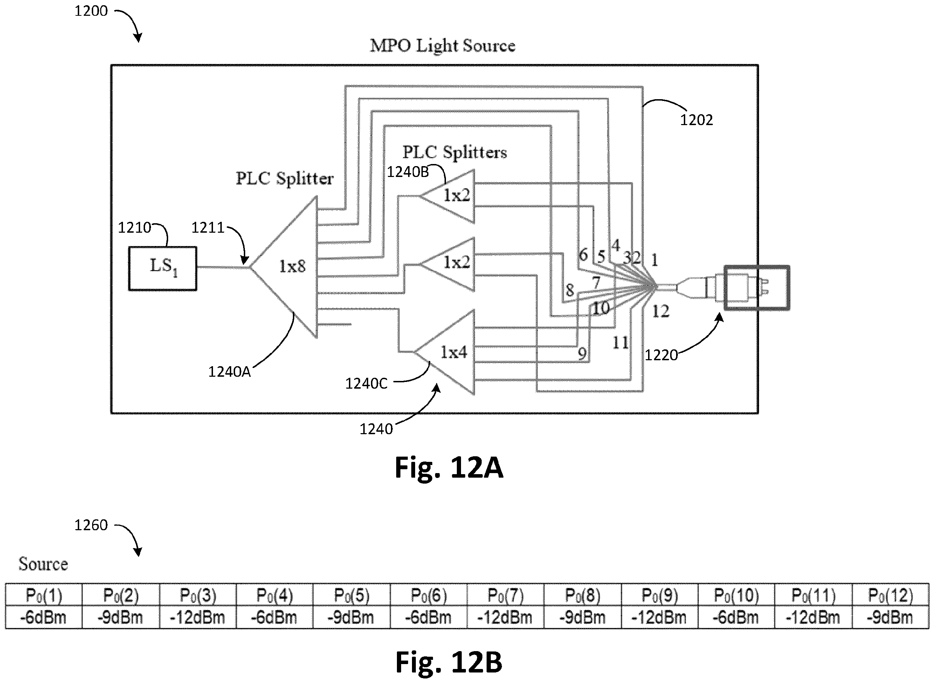

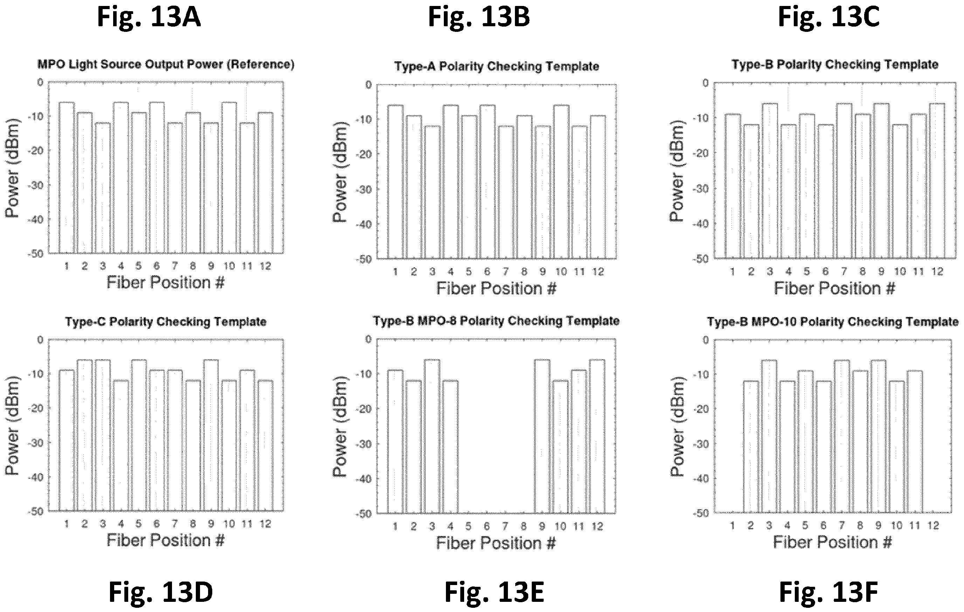

Referring now to Fig. 12A, an exemplary embodiment of a light source side 1200 of an apparatus for polarity detection and loss measurement is provided. The apparatus 1200 may be configured substantially similarly as the apparatus 1100 described in regard to Fig. 11. The apparatus 1200 particularly includes a plurality of PLC splitters 1240 configured to generate three (3) distinctive power levels. In an exemplary embodiment in which a single light source 1210 generates an output power of 3 dBm, an exemplary reference output power level pattern of the port 1220 is provided in table 1260 in Fig. 12B. Figs. 13A-13F depict exemplary polarity-specific output pattern templates determined in accordance with the exemplary embodiment of Figs. 12A-12B and the method 1800.

In a particular embodiment of the light source side 1200 such as depicted in Fig. 12A, the light source side 1200 includes a first splitter 1240A configured as a $1 \times 8$ splitter. A fiber 1211 is configured to provide a signal generated by the light source 1210 ($LS_1$) and to the first splitter 1240A. The first splitter 1240A, configured as a $1 \times 8$ splitter, receives the signal 1211 and outputs fibers 1202 to the port 1220. The port 1220 may be configured substantially as the first port 320 such as described regarding Fig. 5. In a particular embodiment, four (4) fibers are provided from the first splitter 1240A to the port 1220. The light source side 1200 includes a pair of second splitters 1240B each configured as $1 \times 2$ splitters. Each second splitter 1240B is configured to receive a respective fiber (e.g., a single fiber input) from the first splitter 1240A and output respective pairs of fibers to the port 1220. The light source side 1200 includes a third splitter 1240C configured as a $1 \times 4$ splitter. The third splitter 1240C is configured to receive a respective fiber from the first splitter 1240A and output four (4) fibers 1202 to the port 1220.

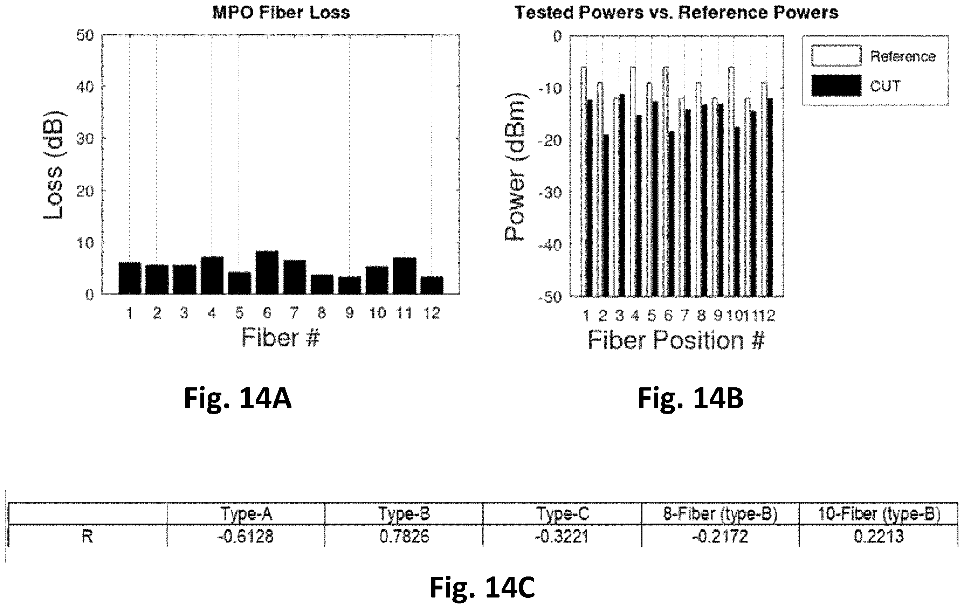

Figs. 14A-14B depict exemplary numerical simulations based on the exemplary embodiments provided in regard to Figs. 12A-12B and Figs. 13A-13F. Fig. 14A depicts losses of each fiber of the cabling-under-test (CUT) from position 1 to position 12 at the light source side. In an exemplary embodiment, the simulated CUT has Type-B polarity and has an average insertion loss of 6 dB with random inter-fiber loss variations within approximately +/- 3 dB. Fig. 14B depicts the measured output powers of the CUT (i.e., $P_2(1)$ through $P_2(12)$) and comparison with the reference power based polarity template (i.e., $T_0(1)$ through $T_0(12)$ in table 800 in regard to Fig. 8). The correlation coefficient between the output power pattern and each polarity checking template depicted in Figs. 13A-13F are calculated such as provided in the equation above. Exemplary results are depicted in Fig. 14C and illustrating the highest correlation with the Type-B template in Fig. 13C.

Referring now to Fig. 15A, an exemplary embodiment of a light source side 1500 of an apparatus for polarity detection and loss measurement is provided. The apparatus 1500 may be configured substantially similarly as the apparatus 1200 described in regard to Fig. 12A. The embodiment in Fig. 15A includes three (3) light sources 1510A, 1510B, 1510C each configured with different power, frequency, or wavelength levels relative to one another. Each light source 1510A, 1510B, 1510C is operably coupled, such as via fiber 1511, to respective splitters 1540. Accordingly, the embodiment provided in regard to Fig. 15A may particularly include an equal quantity of splitters 1540 to light sources 1510A, 1510B, 1510C. Each splitter 1540 is configured as a $1 \times 4$ splitter in which four (4) output signals 1502 from each splitter 1540 are provided to port 1520. The three light sources 1510A, 1510B, 1510C generate a source pattern similar to such as provided in the apparatus of Fig. 13A. However, for apparatus 1500 depicted in Fig. 15A, each fiber may have a 3dB-higher power level than the apparatus 1200. Exemplary embodiments depicted and described with regard to apparatus 1500 may be particularly advantageous for relatively long-length cable testing. In an exemplary embodiment, light source 1510A ($LS_1$) is configured to output power set at 3 dBm, light source 1510B ($LS_2$) is set a 0 dBm, and light source 1510C ($LS_3$) is set at -3 dBm. Fig. 15B depicts an exemplary source power pattern 1560 from the apparatus 1500.

Apparatuses depicted and described in regard to Figs. 9-15A may form analog signal processing embodiments. The fiber position information with the source port is encoded in the respective output power levels. However, analog signal processes may be relatively more susceptible to noises or interferences. Loss variations between fibers of the CUT may substantially distort the output patterns, such as demonstrated in Figs. 14A-14B.

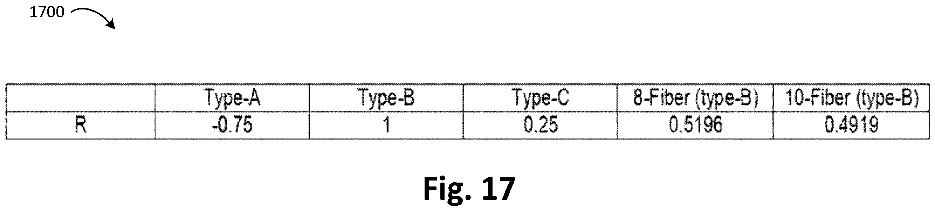

Referring now to Fig. 16A, an exemplary embodiment of a light source side 1600 of an apparatus for polarity detection and loss measurement is provided. The apparatus 1600 may be configured substantially similarly as the apparatus 1500 described in regard to Fig. 15A. The apparatus 1600 includes a plurality of light sources 1610A, 1610B, 1610C each configured to output digital optical signals, such as depicted respectively at 1611. In various embodiments, the plurality of light sources 1610A, 1610B, 1610C are configured to generate a substantially similar peak power of the digital optical signals, e.g., 0 dBm. The plurality of splitters 1640 are configured to evenly split the light into each fiber 1602. In various embodiments, the digital optical signal 1611 is generated by electronically or optically adjusting or modulating the emitted light from the light sources 1610A, 1610B, 1610C. The arrangement and configuration of light sources 1610A, 1610B, 1610C and splitters 1640 generates a unique digital signature corresponding to each fiber 1602. Stated differently, each fiber 1602 of the port 1620 of the light source side 1600 is assigned with a unique digital signature. Various embodiments or formations of unique digital signatures may include a pulse frequency, variable frequency wave, pulse train, or a unique tone generally, such as to represent a particular source. The digital signal allows for high-fidelity detection at the optical power meter side (e.g., OPM side 400) of the apparatus (e.g., apparatus 600) after traveling through the CUT. Such high-fidelity may be maintained during instances having high insertion losses or significant loss variations between fibers. As illustrated in the exemplary table 1660 in Fig. 16B, the measured output fiber digital signature pattern $F_2(n)$ of the CUT may be noise or interference free. Furthermore, digital signals may further detect and exclude dark or absent fibers and may mitigate negative impacts from contaminated connectors. Fig. 17 furthermore provides a table 1700 of an exemplary numerical simulation of a Type-B cable polarity using the method 1800 and a digital signal apparatus 1600 such as provided in Fig. 16A. In various embodiments, method 1800 includes determining the polarity templates based on the output fiber digital signature pattern (e.g., at port 1620). Port 1620 may be configured substantially similar as the first port 320 such as described regarding Fig. 5. The polarity templates (e.g., data series $T_0(n)$) may be generated and stored in a memory device (e.g., memory device 652). In such embodiments, the polarity template may be predetermined and stored in the memory device without a need to measure the reference power. The output fiber digital signature data series ($F_2(n)$) and the polarity-specific data series ($T_0(n)$) may be artificial data arrays, such as for correlation computation. The values (e.g., $F_2(n)$, $T_0(n)$) forming the arrays may be predefined to represent a corresponding digital fiber signature. In certain embodiments, the digital fiber signature may include a set of numbers (e.g., 1, 2, 3) that represent three different digital signatures 1611A, 1611B, 1611C. A different set of values (e.g., 5, 6, 7) will not affect the outcome of polarity matching. For absent fibers or fibers without digital signature signal detected, a value of 0 can be assigned. As illustrated in the exemplary table 1660 in Fig. 16B, measured output fiber digital signature pattern of the CUT may have a similar pattern as corresponding the polarity template (e.g., high correlation). Such high correlation may apply to most scenarios. Certain exceptions may include scenarios where fibers may be absent. In such scenarios, fiber digital signatures may be undetected or wrongfully detected. This character further demonstrates advantages of such digital embodiments as depicted and described in Fig. 16A and methods 1800 may possess.

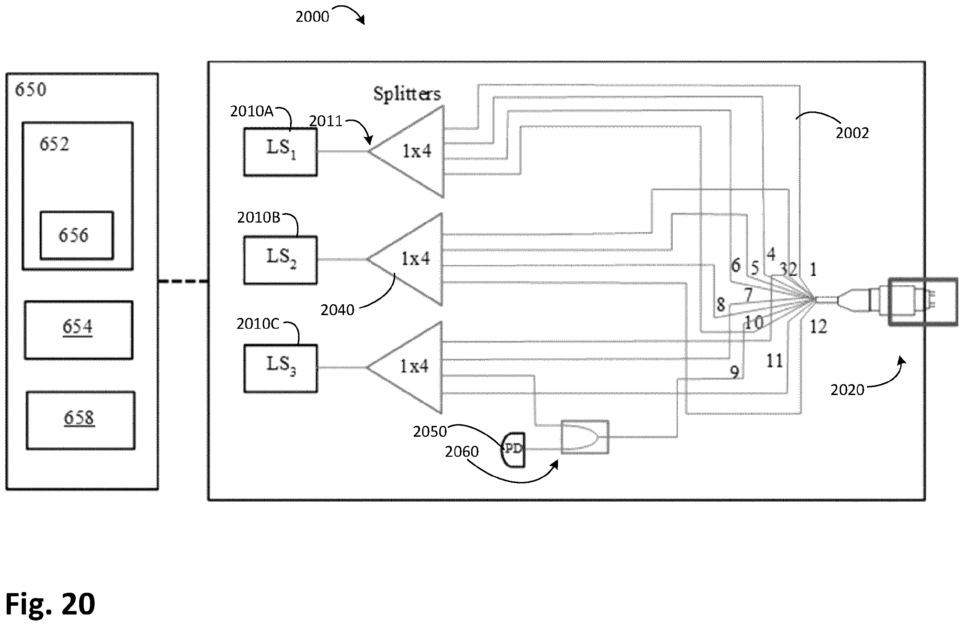

Referring now to Fig. 20, an exemplary embodiment of a light source side 2000 of an apparatus for polarity detection, loss measurement, and cable length measurement is provided. The apparatus 2000 may be configured substantially similarly as apparatus 1500 described in regard to Fig. 15A or apparatus 1600 described in regard to Fig. 16A. Apparatus 2000 includes a plurality of light sources 2010A, 2010B, 2010C operably coupled to respective splitters 2040, such as depicted and described in regard to light sources and splitters of apparatus 1500, 1600. Apparatus 2000 may be configured similarly as the apparatus 1500 to generate a source output power pattern for polarity detection and loss measurement, such as provided in Fig. 13A. Apparatus 2000 may furthermore be configured similarly as apparatus 1600 to emit digital signals 2011 carrying fiber digital signatures for polarity detection on each fiber 2002 of port 2020.

An exemplary method for loss measurement may be executed using apparatus 2000. The method includes transmitting or outputting a continuous wave (CW) light signal, a modulated light signal, or both, from the respective light sources 2010A, 2010B, 2010C to the respectively coupled splitters 2040. In various embodiments, apparatus 2000 includes an optical branching device 2060, such as a coupler or splitter, positioned at any one of the plurality of fibers 2002 (e.g., any one of twelve (12) fibers). Apparatus 2000 may include the optical branching device 2060 for performing over-the-fiber optical communications with an optical power meter side (e.g., OPM side 400) of an apparatus for loss measurement and fiber length-measurement (e.g., apparatus 600). In the particular embodiment provided in Fig. 20, the optical branching device 2060 is positioned at fiber 9. Optical communication signals or length-measurement pulses can be emitted from the light source 2010C ($LS_3$) and travel through fiber 3, 7, 9 and 11 and through port 2020 to the optical power meter side (e.g., OPM side 400). In a particular embodiment of the method, the plurality of light sources 2010A, 2010B, 2010C ($LS_1$, $LS_2$, and $LS_3$) provide light simultaneously to "broadcast" optical communication signals or length-measurement pulses. Such method may provide a more reliable communication of signals.

In a still particular embodiment, apparatus 2000 includes a photodiode (PD) 2050 connected to the optical branching device 2060. The photodiode 2050 may be configured to receive optical communication signals or length-measurement transponder pulses sent from the optical power meter side (e.g., OPM side 400). Controller 650 may be configured to provide the electronic controls and computations for performing the polarity detection, optical power/loss measurement, length measurement, and over-the-fiber optical communications in accordance with one or more embodiments of the methods described herein.

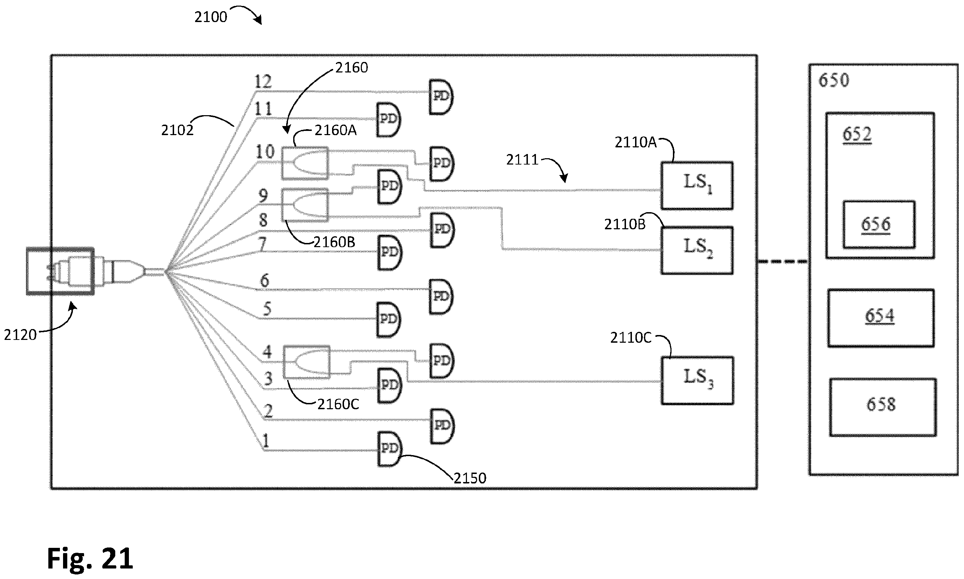

Referring now to Fig. 21, an exemplary embodiment of an optical power meter side 2100 of an apparatus for polarity detection, loss measurement, and cable length measurement is provided. The optical meter side 2100 may be configured similarly as the OPM side 400 described in regard to Fig. 4. The OPM side 2100 provided in Fig. 21 includes a plurality of light sources 2110A, 2110B, 2110C ($LS_1$, $LS_2$, $LS_3$) such as described in regard to embodiments of light sources above. Each light source 2110A, 2110B, 2110C is configured to generate a respective signal 2111 such as described above. The signal 2111 is received by a respective optical branching device 2160. Stated differently, the optical branching device 2160 is positioned between respective fibers and photodiodes 2150. In the particular embodiment depicted in Fig. 21, respective optical branching devices 2160 are positioned between fibers 4, 9, and 10 and respective photodiodes 2150. An embodiment of a method for optical communication and length-measurement includes sending light or light pulses to the light source side (e.g., LS side 300) from the plurality of light sources 2110A, 2110B, 2110C through the respective optical branching devices 2160A, 2160B, 2160C. The light sources 2110A, 2110B, 2110C may be configured to "broadcast" digital signals simultaneously, such as to support over-the-fiber communications for A, B and C polarity. Additionally, or alternatively, after performing the method for polarity detection such as described above, a single light source may be connected to particular fibers and light is provided through the selected fiber. For example, light source 21010B ($LS_2$) and fiber 9 may be selected for communications over Type-A cable. In another example, light source 2110C ($LS_3$) and fiber 4 may be selected for communications over Type-B cable. In still another example, light source 2110A ($LS_1$) and fiber 10 may be selected for communications over Type-C cable. Controller 650 may be configured to provide the electronic controls and computations for performing the polarity detection, optical power/loss measurement, length measurement, and over-the-fiber optical communications in accordance with one or more embodiments of the methods described herein.

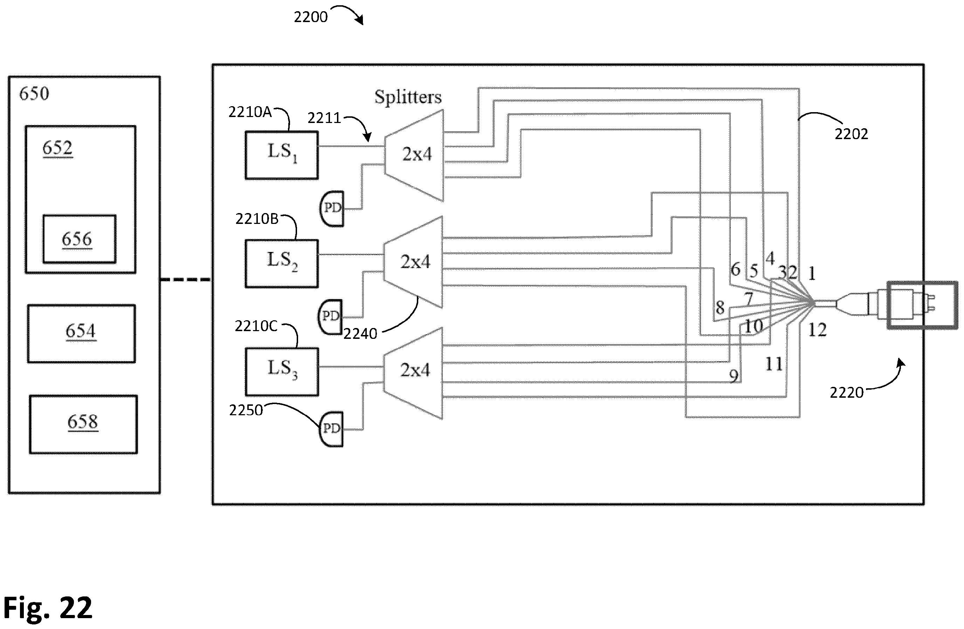

Referring now to Fig. 22, an exemplary embodiment of a light source side 2200 of an apparatus for polarity detection, loss measurement, and cable length measurement is provided. The light source side 2200 may be configured substantially similarly as the light source side 2000 described in regard to Fig. 20. In various embodiments, light source side 2200 includes light sources 2210A, 2210B, 2210C each configured to generate and transmit a signal 2211 that is received by respective splitters 2240. In Fig. 22, the splitter 2240 is configured as a 2 × 4 splitter operably coupled to respective light sources 2210A, 2210B, 2210C. One input port of the 2×4 splitter 2240 is operably connected to the corresponding light source 2210A, 2210B, 2210C and the other port is operably connected to a respective photodiode (PD) 2250 to receive optical communication signals or length-measurement transponder pulses sent from the optical power meter side (e.g., OPM side 400). Configurations such as provided in regard to Fig. 22 obviate a need for optical branching devices, such as provided in Fig. 20. Optical communication signals may transfer from any one or more fibers 2202 in the cable and accommodate any possible polarity type (e.g., A, B, C, polarity, etc.).

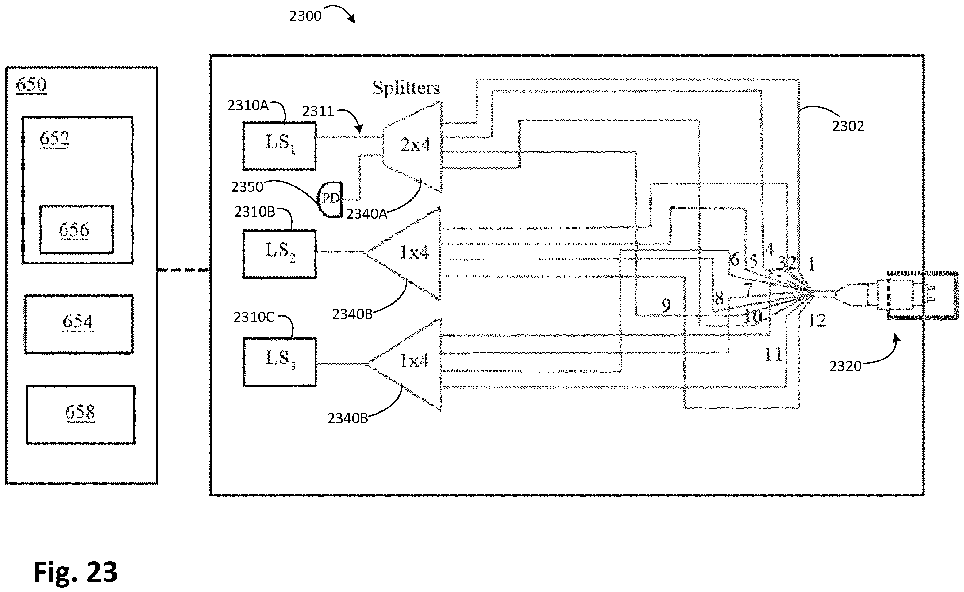

Referring now to Fig. 23, an exemplary embodiment of a light source side 2300 of an apparatus for polarity detection, loss measurement, and cable length measurement is provided. The light source side 2300 may be configured substantially similarly as the light source side 2200 described in regard to Fig. 22. In various embodiments, light source side 2300 includes light sources 2310A, 2310B, 2310C each configured to generate and transmit a signal 2311 that is received by respective splitters 2340A, 2340B. The embodiment depicted in Fig. 23 includes fibers 4, 9 and 10 consolidated to a single first splitter 2340A forming a 2×4 splitter. Light source side 2300 switches the linkage of fiber 6 and 9 relative to the light source side 2200 depicted in Fig. 22. Light source side 2300 further includes a second splitter 2340B each forming a 1 × 4 splitter. A single photodiode 2350 receives optical signals from the optical power meter side (e.g., OPM side 400), such as through operable connection with the first splitter 2340A. Embodiments of the light source side such as provided in Fig. 23 may allow for optical communications over a Type-A, Type-B, or Type-C polarity cable.

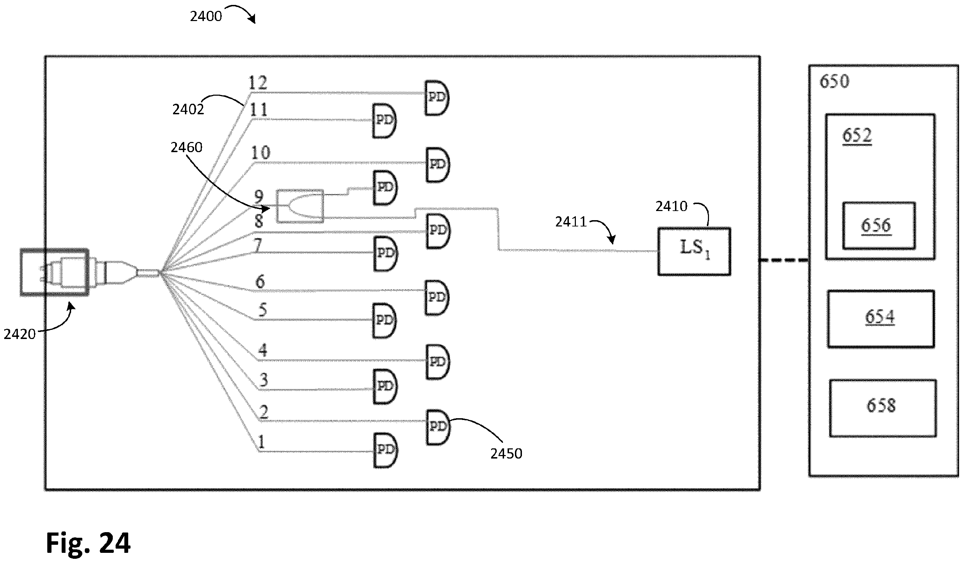

Referring to Fig. 24, an exemplary embodiment of an optical power meter side 2400 of an apparatus for polarity detection, loss measurement, and cable length measurement is provided. Apparatus 2400 may be included with an appropriate light source side apparatus, such as depicted and described in regard to LS side 2200, 2300 in Figs. 22-23, to provide polarity detection, loss measurement, and cable length measurement. OPM side 2400 may be configured substantially similarly as depicted and described with regard to OPM side 2100. However, OPM side 2400 includes a single light source 2410 (LS₁) operably coupled to a single optical branching device 2460. Light source 2410 is configured to generate and transmit signal 2411 to optical branching device 2460. OPM side 2400 includes a plurality of photodiodes 2450 each operably coupled to respective fibers 2402 extending from second port 2420. The optical branching device 2460 operably couples a respective photodiode 2460 and light source 2410. Embodiments of apparatus 600 including OPM side 2400 allow for a single optical branching device 2460 and a single light source 2410 to send optical communication signals or length-measurement transponder pulses for any possible polarities, such as when paired with light source side 2200 (Fig. 22).

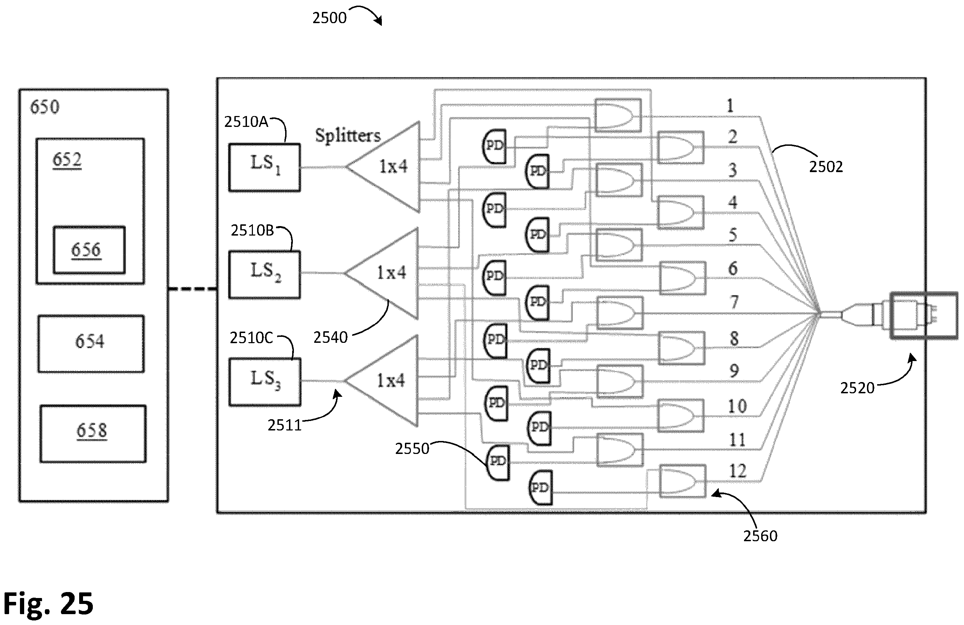

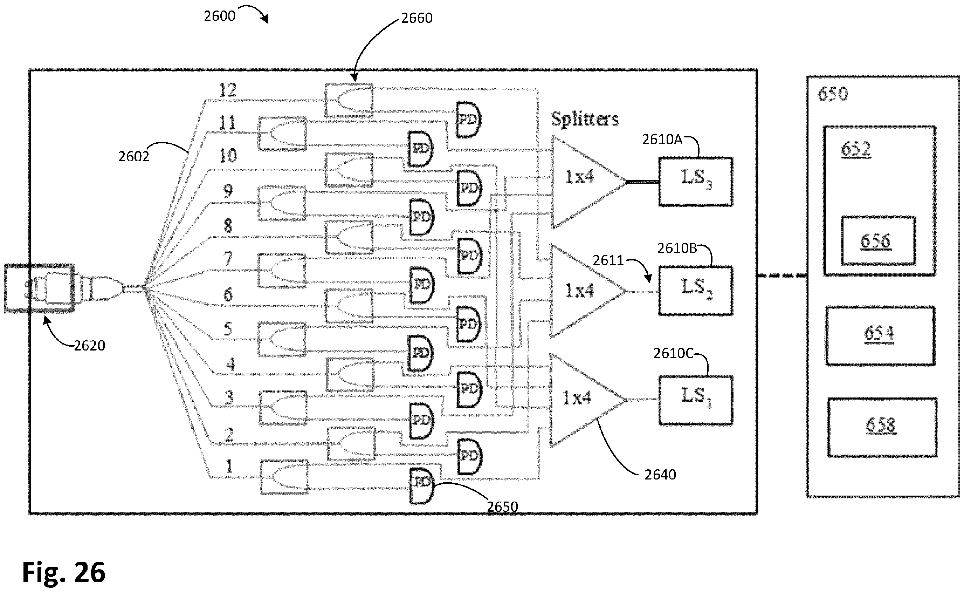

Referring now to Fig. 25, an exemplary embodiment of a light source side 2500 of an apparatus for polarity detection, loss measurement, and cable length measurement is provided. Referring to Fig. 26, an exemplary embodiment of an optical power meter (OPM) side 2600 of an apparatus for polarity detection, loss measurement, and cable length measurement is provided. Both the light source side 2500 and the optical power meter side 2600 of the apparatus may be configured substantially similarly. Each embodiment includes a plurality of light sources (e.g., light source 2510A, 2510B, 2510C at the light source side 2500 and light source 2610A, 2610B, 2610C at the OPM side 2600). A photodiode (e.g., photodiode 2550, 2650) is operably coupled to individual fibers (e.g., fiber 2502, 2602) of the port (e.g., port 2520, 2620) through optical branching devices (e.g., optical branching device 2560, 2660). A plurality of splitters (e.g., splitter 2540, 2640) each forming 1×4 splitters is configured to generate a source output power pattern similar to the embodiment depicted and described in regard Fig. 15A, or an output digital signal pattern similar to the embodiment depicted and described in regard Fig. 16A, with photodiodes (PD) configured in sequence from fiber 1 to 12. As such, each side (such as light source side 300 and OPM side 400 of apparatus 600) may function as both light source and power meter as described in regard to the light source side 2000 depicted in Fig. 20 and the OPM side 2100 depicted in Fig. 21. The configurations provided in regard to Figs. 25-26 together facilitate bi-directional insertion loss measurement of the CUT (e.g., CUT 610). Each side of the apparatus is further configured to measure back-reflection power from each fiber through the optical branching devices and photodiodes while only the same-side light sources are on. As such, optical return loss (ORL) measurements of the CUT may be performed. Furthermore, optical communications and length measurements may be performed over any one or more fibers without regard for the polarity of the CUT.

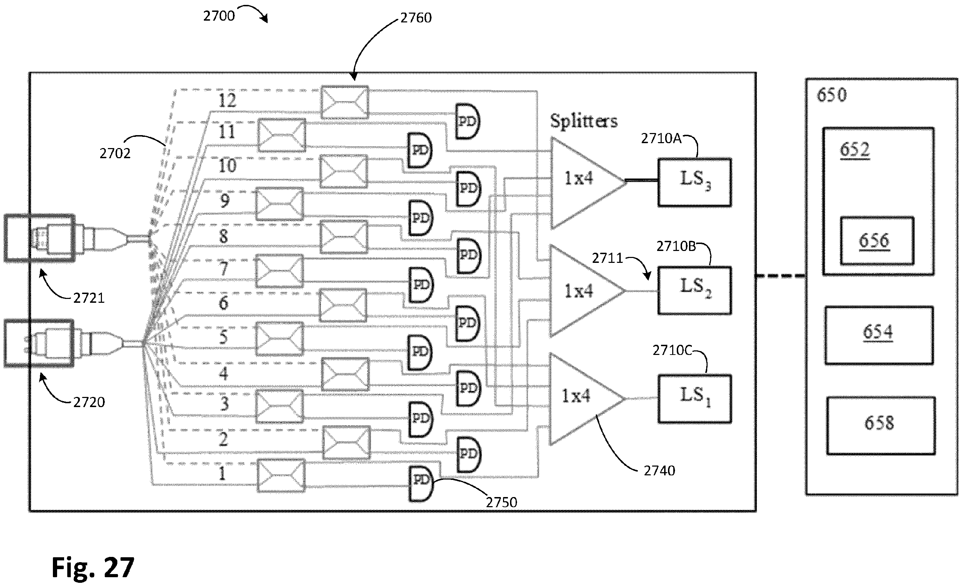

Referring now to Fig. 27, an exemplary embodiment of an optical power meter (OPM) side 2700 of an apparatus for polarity detection, loss measurement, and cable length measurement is provided. The power meter side 2700 may be configured substantially similarly as the light source side 2600 described in regard to Fig. 26. The embodiment includes a plurality of light sources (e.g., light source 2710A, 2710B, 2710C). A photodiode (e.g., photodiode 2750) is operably coupled to individual fibers (e.g., fibers 2702) of the port (e.g., port 2720, 2721) through optical branching devices (e.g., optical branching device 2760). Each of two input fibers of an optical branching device 2760 is respectively coupled to individual fibers 2702 of port 2720 and 2721 at a same fiber position. Accordingly, port 2720 and 2721 are each configured substantially identically to one another. However, port 2720 is configured as a pinned MPO port and port 2721 is configured as an unpinned MPO port. In certain embodiments, pinned port 2720 forms the second port 420 (Fig. 6), such as for testing pinned MPO cabling-under-test with an optical power meter side (e.g., OPM side 400) of an apparatus for loss measurement and fiber length-measurement (e.g., apparatus 600). In still certain embodiments, unpinned port 2721 forms the second port 420 for testing unpinned MPO cabling-under-test with an optical power meter side (e.g., OPM side 400) of an apparatus for loss measurement and fiber length-measurement (e.g., apparatus 600). Embodiments of the apparatus including a dual port configuration (i.e., ports 2720 and 2721) may eliminate a need for complex and costly gender-changeable or gender-conversion test cords for testing.

Referring still to Fig. 27, OPM side 2700 includes a plurality of splitters (e.g., splitter 2740) each forming 1×4 splitters. In one embodiments, splitter 2740 is configured to generate a source output power pattern, such as described in regard to Fig. 15A. In another embodiment, splitter 2740 is configured to generate an output digital signal pattern, such as described in regard to Fig. 16A. Splitter 2740 may further include photodiodes (PD) configured in sequence from fiber 1 to 12, such as depicted and described in regard to Fig. 16A. As such, OPM side 2700 may function as both light source and power meter as depicted in Fig. 27.

Embodiments of the apparatus 600 combining light source side 2500 (Fig. 25) and OPM side (Fig. 27) may provide bi-directional insertion loss measurement of the CUT (e.g., CUT 610). Each side of the apparatus is further configured to measure back-reflection power from each fiber through the optical branching devices and photodiodes while only the same-side light sources are on. As such, optical return loss (ORL) measurements of the CUT may be performed. Furthermore, optical communications and length measurements may be performed over any one or more fibers without regard for the polarity of the CUT.

Various embodiments of apparatus 600 may include a first port (e.g., first port 320) including a first plurality of optical fibers. The first plurality of optical fibers is operably coupled to receive light from a light source, such as described in regard to various embodiments of light sources and light source sides described herein. A light splitter assembly (e.g., any one or more embodiments of light splitting assembly, PLC splitter, or other splitter such as described in regard to various embodiments herein) is configured to split the light from the light source into the first plurality of optical fibers of the first port. A second port (e.g., second port 420) includes a second plurality of optical fibers. The second plurality of optical fibers is operably coupled to an optical power meter, such as described in regard to various embodiments of OPM sides described herein. A cabling-under-test (e.g., CUT 610) operably couples the first port and the light source to the second port and the optical power meter. A test cable (e.g., test cord 510, 520) operably couples the first port to the cabling-under-test and the second port to the cabling-under-test. A controller (e.g., controller 650) is configured to store instructions that, when executed by one or more processing devices, performs operations, such as one or more steps of various embodiments of methods 1800, 1900 provided herein. Various embodiments of apparatuses and methods provided herein may include the first and second pluralities of optical fibers configured as single-mode, multimode, or other types of waveguide, or combinations thereof.

In one embodiment, apparatus 600 depicted in Fig. 6 forms an apparatus for polarity detection, loss measurement, and cable length measurement, in which the light source side 300 is configured as the light source side 2000 such as depicted and described in Fig. 20. Port 2020 (Fig. 20) forms the first port 320 (Fig. 6) and is configured to operably couple to the first test cord 510. The first test cord 510 is operably coupled to port 2020 at plug 511. The first test cord 510 is operably coupled to the CUT 610, such as at the interface of plug 512 at the first test cord 510 and plug 611 at the CUT 610. The CUT 610 is operably coupled to the second test cord 520, such as at the interface of plug 522 at the second test cord 520 and plug 612 at the CUT 610. The second test cord 520 is operably coupled to various embodiments of the OPM side 400, such as depicted and described in regard to OPM side 2100 (Fig. 21), OPM side 2400 (Fig. 24), OPM side 2600 (Fig. 26), or OPM side 2700 (Fig. 27).

In another embodiment, apparatus 600 depicted in Fig. 6 forms an apparatus for polarity detection, loss measurement, and cable length measurement, in which the light source side 300 is configured as the light source side 2200 such as depicted and described in Fig. 22. Port 2220 (Fig. 22) forms the first port 320 (Fig. 6) and is configured to operably couple to the first test cord 510. The first test cord 510 is operably coupled to port 2220 at plug 511. The first test cord 510 is operably coupled to the CUT 610, such as at the interface of plug 512 at the first test cord 510 and plug 611 at the CUT 610. The CUT 610 is operably coupled to the second test cord 520, such as at the interface of plug 522 at the second test cord 520 and plug 612 at the CUT 610. The second test cord 520 is operably coupled to various embodiments of the OPM side 400, such as depicted and described in regard to OPM side 2100 (Fig. 21), OPM side 2400 (Fig. 24), OPM side 2600 (Fig. 26), or OPM side 2700 (Fig. 27).

In yet another embodiment, apparatus 600 depicted in Fig. 6 forms an apparatus for polarity detection, loss measurement, and cable length measurement, in which the light source side 300 is configured as the light source side 2300 such as depicted and described in Fig. 23. Port 2320 (Fig. 23) forms the first port 320 (Fig. 6) and is configured to operably couple to the first test cord 510. The first test cord 510 is operably coupled to port 2320 at plug 511. The first test cord 510 is operably coupled to the CUT 610, such as at the interface of plug 512 at the first test cord 510 and plug 611 at the CUT 610. The CUT 610 is operably coupled to the second test cord 520, such as at the interface of plug 522 at the second test cord 520 and plug 612 at the CUT 610. The second test cord 520 is operably coupled to various embodiments of the OPM side 400, such as depicted and described in regard to OPM side 2100 (Fig. 21), OPM side 2400 (Fig. 24), OPM side 2600 (Fig. 26) ), or OPM side 2700 (Fig. 27).

In still another embodiment, apparatus 600 depicted in Fig. 6 forms an apparatus for polarity detection, loss measurement, and cable length measurement, in which the light source side 300 is configured as the light source side 2500 such as depicted and described in Fig. 25. Port 2520 (Fig. 25) forms the first port 320 (Fig. 6) and is configured to operably couple to the first test cord 510. The first test cord 510 is operably coupled to port 2520 at plug 511. The first test cord 510 is operably coupled to the CUT 610, such as at the interface of plug 512 at the first test cord 510 and plug 611 at the CUT 610. The CUT 610 is operably coupled to the second test cord 520, such as at the interface of plug 522 at the second test cord 520 and plug 612 at the CUT 610. The second test cord 520 is operably coupled to various embodiments of the OPM side 400, such as depicted and described in regard to OPM side 2100 (Fig. 21), OPM side 2400 (Fig. 24), OPM side 2600 (Fig. 26) ), or OPM side 2700 (Fig. 27).

In certain embodiments, plug 521 operably connects the second test cord 520 (Fig. 6) to the OPM side 2100 (Fig. 21) at port 2120 forming the second port 420 (Fig. 6).

In still certain embodiments, plug 521 operably connects the second test cord 520 (Fig. 6) to the OPM side 2400 (Fig. 24) at port 2420 forming the second port 420 (Fig. 6).

In yet still certain embodiments, plug 521 operably connects the second test cord 520 (Fig. 6) to the OPM side 2600 (Fig. 26) at port 2620 forming the second port 420 (Fig. 6).

Embodiments of the methods and apparatuses provided herein may reduce a quantity of light sources required for polarity detection and optical insertion loss measurement, while allowing for quicker and less cumbersome testing and detection than methods and apparatuses utilizing, e.g., 1:1 ratio of light sources to fibers or optical switches. Certain embodiments of the methods and apparatuses provided herein, such as depicted regarding light source side 1000, 1100, 1200 include particularly a single light source 1010, 1110, 1210. The light source side 1000, 1100, 1200 is configured to facilitate polarity detection and optical insertion loss measurement while limiting the quantity of lasers, optical devices, light sources, and other components, such as to allow for quicker and less cumbersome testing and detection.

Still certain embodiments of the methods and apparatuses provided herein, such as depicted regarding light source side 1500, 1600, 2000, 2200, 2300, 2500, may particularly include three (3) light sources, such as depicted and described herein. Embodiments such as provided herein may provide polarity detection, loss measurement, and cable length measurement in a single apparatus.

Embodiments of the apparatus 600 including light source side 2500 and OPM side 2600, or light source side 2500 and OPM side 2700 may further provide bi-directional insertion loss measurement of the CUT, including optical return loss (ORL) measurement and back-reflection measurement, in a single apparatus. For instance, apparatus 600 including LS side 2500 and OPM side 2600 may allow for measuring changes in direction of light and return to the respective light sources at the LS side 2500 and OPM side 2600.

Further aspects of the disclosure are provided in the following clauses:

    1. An apparatus for polarity detection, the apparatus including a first port including a first plurality of optical fibers, the first plurality of optical fibers operably coupled to receive light from a light source; a light splitter assembly configured to split the light from the light source into the first plurality of optical fibers of the first port; a second port including a second plurality of optical fibers, the second plurality of optical fibers operably coupled to an optical power meter; a cabling-under-test operably coupling the first port and the light source to the second port and the optical power meter; a test cable operably coupling the first port to the cabling-under-test and the second port to the cabling-under-test; and a controller, the controller configured to store instructions that, when executed by one or more processing devices, performs operations, the operations including; transmitting light from the light source; adjusting a signal parameter of the light; comparing an output optical signal parameter pattern of the cabling-under-test with a polarity pattern template; and determining the polarity of the cabling-under-test based at least on a best-fit of the output optical signal parameter pattern to the polarity pattern template.

2. The apparatus of any one or more clauses herein, wherein adjusting a signal parameter of the light includes electronically or optically adjusting a modulation frequency, a pulse repetition rate, or an optical digital signal formations of the light split by a splitter.

3. The apparatus of any one or more clauses herein, wherein comparing the output optical signal parameter pattern of the cabling-under-test with the polarity pattern template includes comparing a fiber digital signature pattern of the cabling-under-test with the polarity pattern template; and wherein determining the polarity of the cabling-under-test based at least on a best-fit of the output optical signal parameter pattern to the polarity pattern template includes determining the polarity of the cabling-under-test based at least on a best-fit of the fiber digital signature pattern to a polarity template.

4. The apparatus of any one or more clauses herein, the operations including obtaining a fiber digital signature pattern of the cabling-under-test; and generating a numerical data pattern corresponding to the fiber digital signal pattern.

5. The apparatus of any one or more clauses herein, the operations including generating a polarity pattern template; and generating a numerical data pattern corresponding to the polarity pattern template.

6. The apparatus of any one or more clauses herein, wherein determining the polarity of the cabling-under-test includes determining a correlation coefficient between the obtained fiber digital signature pattern of the cabling-under-test and the polarity pattern template.

7. The apparatus of any one or more clauses herein, wherein determining the polarity of the cabling-under-test includes identifying the highest correlation coefficient to determine the polarity of the cabling-under-test.

8. The apparatus of any one or more clauses herein, wherein the light source is three light sources operably coupled to the first plurality of fibers at the first port.

9. The apparatus of any one or more clauses herein, wherein adjusting a signal parameter of the light includes optically or electronically adjusting a power level of the light split by a splitter.

10. The apparatus of any one or more clauses herein, wherein comparing the output optical signal parameter pattern of the cabling-under-test with the polarity pattern template includes comparing an output power pattern of the cabling-under-test with the polarity pattern template; and determining the polarity of the cabling-under-test based at least on a best-fit of the output optical signal parameter pattern to the polarity pattern template includes determining the polarity of the cabling-under-test based at least on a best-fit of the output power pattern to a polarity template.

11. The apparatus of any one or more clauses herein, the operations including obtaining a reference output power; and obtaining an output power pattern of the cabling-under-test.

12. The apparatus of any one or more clauses herein, the operations including generating a polarity pattern template.

13. The apparatus of any one or more clauses herein, wherein determining the polarity of the cabling-under-test includes determining a correlation coefficient between the obtained output power of the cabling-under-test and the polarity pattern template.

14. The apparatus of any one or more clauses herein, wherein determining the polarity of the cabling-under-test includes identifying the highest correlation coefficient to determine the polarity of the cabling-under-test.

15. The apparatus of any one or more clauses herein, wherein the light source is a single light source operably coupled to the port.

16. The apparatus of any one or more clauses herein, wherein the port is a multi-fiber push on connector.

17. The apparatus of any one or more clauses herein, the apparatus including a light splitting assembly configured to distribute light from the single light source to the first plurality of optical fibers at the first port or the second plurality of optical fibers at the second port.

18. The apparatus of any one or more clauses herein, wherein the light splitting assembly is a planar light circuit splitter.

19. The apparatus of any one or more clauses herein, the apparatus including a fiber splice operably coupled to the first plurality of optical fibers.

20. The apparatus of any one or more clauses herein, wherein the light source is a plurality of light sources operably coupled to the first plurality of fibers at the first port.

21. The apparatus of any one or more clauses herein, wherein the plurality of light sources is fewer than the first plurality of fibers at the first port or the second plurality of fibers at the second port, and wherein the apparatus includes a plurality of planar light circuit splitters operably coupled to the first plurality of fibers or the second plurality of fibers, the plurality of planar light circuit splitters configured to generate a plurality of distinct power, frequency, or wavelength levels.

22. A controller for an apparatus for polarity detection and optical insertion loss measurement, the controller including one or more memory devices and one or more processing devices, the one or more memory devices storing instructions that, when executed by the one or more processors, causes the apparatus to perform operations, the operations including transmitting light from a light source; adjusting a signal parameter of the light; comparing an output optical signal parameter pattern of a cabling-under-test with a polarity pattern template; determining the polarity of the cabling-under-test based at least on a best-fit of the output optical signal parameter pattern to the polarity pattern template; obtaining a reference power output and an output power of the cabling-under-test; and determining an optical insertion loss of each fiber of the cabling-under-test.

23. The controller of any one or more clauses herein, the operations including obtaining a reference output power; and obtaining an output power pattern of the cabling-under-test.

24. The controller of any one or more clauses herein, the operations including generating a polarity pattern template.

25. The controller of any one or more clauses herein, wherein transmitting light from the light source includes transmitting light from a single light source.

26. The controller of any one or more clauses herein, wherein determining the polarity of the cabling-under-test includes determining a correlation coefficient between the obtained output power of the cabling-under-test and the polarity pattern template.

27. The controller of any one or more clauses herein, wherein determining the polarity of the cabling-under-test includes identifying the highest correlation coefficient to determine the polarity of the cabling-under-test.

28. The controller of any one or more clauses herein, the operations including determining an optical insertion loss of each fiber at the connector.

29. The controller of any one or more clauses herein, wherein adjusting a signal parameter of the light includes electronically or optically adjusting a modulation frequency, a pulse repetition rate, or an optical digital signal formations of the light split by a splitter.

30. The controller of any one or more clauses herein, wherein comparing the output optical signal parameter pattern of the cabling-under-test with the polarity pattern template includes comparing a fiber digital signature pattern of the cabling-under-test with the polarity pattern template; and wherein determining the polarity of the cabling-under-test based at least on a best-fit of the output optical signal parameter pattern to the polarity pattern template includes determining the polarity of the cabling-under-test based at least on a best-fit of the fiber digital signature pattern to a polarity template.

31. The controller of any one or more clauses herein, the operations including obtaining a fiber digital signature pattern of the cabling-under-test; and generating a corresponding numerical data pattern.

32. The controller of any one or more clauses herein, the operations including generating a polarity pattern template; and generating a corresponding numerical data pattern.

33. The controller of any one or more clauses herein, wherein determining the polarity of the cabling-under-test includes determining a correlation coefficient between the obtained fiber digital signature pattern of the cabling-under-test and the polarity pattern template.

34. The controller of any one or more clauses herein, wherein determining the polarity of the cabling-under-test includes identifying the highest correlation coefficient to determine the polarity of the cabling-under-test.

35. The controller of any one or more clauses herein, wherein the light source is a plurality of light sources operably coupled to the first plurality of fibers at the first port.

36. The controller of any one or more clauses herein, wherein the light source is three light sources operably coupled to the first plurality of fibers at the first port.

37. A method for polarity detection, the method including transmitting light from a light source; adjusting a signal parameter of the light; comparing an output optical signal parameter pattern of a cabling-under-test with a polarity pattern template; and determining the polarity of the cabling-under-test based at least on a best-fit of the output optical signal parameter pattern to the polarity pattern template.

38. A method for determining an optical insertion loss, the method including transmitting light from the light source; adjusting a signal parameter of the light; comparing an output optical signal parameter pattern of the cabling-under-test with a polarity pattern template; determining the polarity of the cabling-under-test based at least on a best-fit of the output optical signal parameter pattern to the polarity pattern template; and determining an optical insertion loss of each fiber at a connector.

39. An apparatus for optical power and loss measurement, the apparatus including the apparatus of any one or more clauses herein.

40. An apparatus for length measurement at an optical fiber, the apparatus including the apparatus of any one or more clauses herein.

41. An apparatus for communications over an optical fiber, the apparatus including the apparatus of any one or more clauses herein.

42. An apparatus for optical return loss measurement, the apparatus including the apparatus of any one or more clauses herein.

43. A controller configured to execute one or more steps of the method of any one or more clauses herein.

44. An apparatus including the controller of any one or more clauses herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1.  An apparatus (600) for polarity detection, the apparatus (600) comprising:

    a first port (320) comprising a first plurality of optical fibers, the first plurality of optical fibers operably coupled to receive light from a light source (310);
    a light splitter assembly configured to split the light from the light source (310) into the first plurality of optical fibers of the first port (320);
    a second port (420) comprising a second plurality of optical fibers, the second plurality of optical fibers operably coupled to an optical power meter (410);
    a cabling-under-test (610) operably coupling the first port (320) and the light source (310) to the second port (420) and the optical power meter (410);
    a test cable (510), (520) operably coupling the first port (320) to the cabling-under-test (610) and the second port (420) to the cabling-under-test (610); and
    a controller (650), the controller (650) configured to store instructions that, when executed by one or more processing devices, performs operations, the operations comprising;

transmitting light from the light source (310); adjusting a signal parameter of the light; comparing an output optical signal parameter pattern of the cabling-under-test (610) with a polarity pattern template; and determining the polarity of the cabling-under-test (610) based at least on a best-fit of the output optical signal parameter pattern to the polarity pattern template.

2. The apparatus (600) of claim 1, wherein adjusting a signal parameter of the light comprises electronically or optically adjusting a modulation frequency, a pulse repetition rate, or an optical digital signal formations of the light split by a splitter.

3. The apparatus (600) of claim 1, wherein:

   comparing the output optical signal parameter pattern of the cabling-under-test (610) with the polarity pattern template comprises comparing a fiber digital signature pattern of the cabling-under-test (610) with the polarity pattern template; and
   wherein determining the polarity of the cabling-under-test (610) based at least on a best-fit of the output optical signal parameter pattern to the polarity pattern template comprises determining the polarity of the cabling-under-test (610) based at least on a best-fit of the fiber digital signature pattern to a polarity template.

4. The apparatus (600) of claim 1, the operations comprising:

   obtaining a fiber digital signature pattern of the cabling-under-test (610); and
   generating a numerical data pattern corresponding to the fiber digital signal pattern.

5. The apparatus (600) of claim 4, the operations comprising:

   generating a polarity pattern template; and
   generating a numerical data pattern corresponding to the polarity pattern template.

6. The apparatus (600) of claim 1, wherein determining the polarity of the cabling-under-test (610) comprises:
   determining a correlation coefficient between the obtained fiber digital signature pattern of the cabling-under-test (610) and the polarity pattern template.

7. The apparatus (600) of claim 6, wherein determining the polarity of the cabling-under-test (610) comprises:
   identifying the highest correlation coefficient to determine the polarity of the cabling-under-test (610).

8. The apparatus (600) of claim 1, wherein the light source (310) is three light sources (310) operably coupled to the first plurality of fibers at the first port (320).

9. The apparatus (600) of claim 1, wherein adjusting a signal parameter of the light comprises optically or electronically adjusting a power level of the light split by a splitter (1040).

10. The apparatus (600) of claim 1, wherein:

    comparing the output optical signal parameter pattern of the cabling-under-test (610) with the polarity pattern template comprises comparing an output power pattern of the cabling-under-test (610) with the polarity pattern template; and determining the polarity of the cabling-under-test (610) based at least on a best-fit of the output optical signal parameter pattern to the polarity pattern template comprises determining the polarity of the cabling-under-test (610) based at least on a best-fit of the output power pattern to a polarity template.

11. The apparatus (600) of claim 1, the operations comprising:

    obtaining a reference output power;
    obtaining an output power pattern of the cabling-under-test (610); and
    generating a polarity pattern template.

12. The apparatus (600) of claim 1, wherein determining the polarity of the cabling-under-test (610) comprises:

    determining a correlation coefficient between the obtained output power of the cabling-under-test (610) and the polarity pattern template; and
    identifying the highest correlation coefficient to determine the polarity of the cabling-under-test (610).

13. The apparatus (600) of claim 1, wherein the light source (310) is a single light source (1210) operably coupled to the port (1220), and wherein the port (1220) is a multi-fiber push on connector, and wherein the apparatus (600) comprises a light splitting assembly (1240) configured to distribute light from the single light source (310) to the first plurality of optical fibers (1202).

14. The apparatus (600) of claim 1, wherein the light source (310) is a plurality of light sources (1610A), (1610B), (1610C) operably coupled to the first plurality of fibers (1602) at the first port (320), wherein the plurality of light sources (1610A), (1610B), (1610C) is fewer than the first plurality of fibers (1602) at the first port (320) or the second plurality of fibers at the second port (420), and wherein the apparatus (600) comprises a plurality of planar light circuit splitters (1640) operably coupled to the first plurality of fibers or the second plurality of fibers, the plurality of planar light circuit splitters (1640) configured to generate a plurality of distinct power, frequency, or wavelength levels.

15. The apparatus (600) of claim 1, the operations comprising:

obtaining a reference power output and an output power of the cabling-under-test (610); and determining an optical insertion loss of each fiber of the cabling-under-test (610).

**Fig. 1A**

**Fig. 1B**

**Fig. 1C**

**Fig. 2A**

200

210

Type-A

**Fig. 2B**

200

210

Type-B

**Fig. 2C**

200

210

Type-C

MPO Light Source

300A

310

LS$_1$

330

**Fig. 3A**

$\vdots$ $\cdots$

LS$_N$

320

MPO Light Source

300B

310

331

Optical
Switch

332

**Fig. 3B**

LS$_0$

340

320

MPO Optical Power Meter

Fig. 4

**Fig. 5**

EP 4 249 882 A1

Fig. 6

(a) Source Pattern/Type-A Template

| $P_0(1)/T_0(1)$ | $P_0(2)/T_0(2)$ | $P_0(3)/T_0(3)$ | $P_0(4)/T_0(4)$ | $P_0(5)/T_0(5)$ | $P_0(6)/T_0(6)$ | $P_0(7)/T_0(7)$ | $P_0(8)/T_0(8)$ | $P_0(9)/T_0(9)$ | $P_0(10)/T_0(10)$ | $P_0(11)/T_0(11)$ | $P_0(12)/T_0(12)$ |
|---|---|---|---|---|---|---|---|---|---|---|---|
| $L_1$ | $L_2$ | $L_3$ | $L_4$ | $L_5$ | $L_6$ | $L_7$ | $L_8$ | $L_9$ | $L_{10}$ | $L_{11}$ | $L_{12}$ |

(b) Type-B Template

| $T_0(1)$ | $T_0(2)$ | $T_0(3)$ | $T_0(4)$ | $T_0(5)$ | $T_0(6)$ | $T_0(7)$ | $T_0(8)$ | $T_0(9)$ | $T_0(10)$ | $T_0(11)$ | $T_0(12)$ |
|---|---|---|---|---|---|---|---|---|---|---|---|
| $L_{12}$ | $L_{11}$ | $L_{10}$ | $L_9$ | $L_8$ | $L_7$ | $L_6$ | $L_5$ | $L_4$ | $L_3$ | $L_2$ | $L_1$ |

(c) Type-C Template

| $T_0(1)$ | $T_0(2)$ | $T_0(3)$ | $T_0(4)$ | $T_0(5)$ | $T_0(6)$ | $T_0(7)$ | $T_0(8)$ | $T_0(9)$ | $T_0(10)$ | $T_0(11)$ | $T_0(12)$ |
|---|---|---|---|---|---|---|---|---|---|---|---|
| $L_2$ | $L_1$ | $L_4$ | $L_3$ | $L_6$ | $L_5$ | $L_8$ | $L_7$ | $L_{10}$ | $L_9$ | $L_{12}$ | $L_{11}$ |

(d) 8-Fiber Template (type-B)

| $T_0(1)$ | $T_0(2)$ | $T_0(3)$ | $T_0(4)$ | $T_0(5)$ | $T_0(6)$ | $T_0(7)$ | $T_0(8)$ | $T_0(9)$ | $T_0(10)$ | $T_0(11)$ | $T_0(12)$ |
|---|---|---|---|---|---|---|---|---|---|---|---|
| $L_{12}$ | $L_{11}$ | $L_{10}$ | $L_9$ | $-\infty$ | $-\infty$ | $-\infty$ | $-\infty$ | $L_4$ | $L_3$ | $L_2$ | $L_1$ |

(e) 10-Fiber Template (type-B)

| $T_0(1)$ | $T_0(2)$ | $T_0(3)$ | $T_0(4)$ | $T_0(5)$ | $T_0(6)$ | $T_0(7)$ | $T_0(8)$ | $T_0(9)$ | $T_0(10)$ | $T_0(11)$ | $T_0(12)$ |
|---|---|---|---|---|---|---|---|---|---|---|---|
| $-\infty$ | $L_{11}$ | $L_{10}$ | $L_9$ | $L_8$ | $L_7$ | $L_6$ | $L_5$ | $L_4$ | $L_3$ | $L_2$ | $-\infty$ |

(f) User-Defined*

| $T_0(m)$ | $T_0(m)$ | $T_0(m)$ | $T_0(m)$ | $T_0(m)$ | $T_0(m)$ | $T_0(m)$ | $T_0(m)$ | $T_0(m)$ | $T_0(m)$ | $T_0(m)$ | $T_0(m)$ |
|---|---|---|---|---|---|---|---|---|---|---|---|
| $L_1$ | $L_2$ | $L_3$ | $L_4$ | $L_5$ | $L_6$ | $L_7$ | $L_8$ | $L_9$ | $L_{10}$ | $L_{11}$ | $L_{12}$ |

**Fig. 7**

EP 4 249 882 A1

800

801

(a) Type-A Template

| $T_0(1)$ | $T_0(2)$ | $T_0(3)$ | $T_0(4)$ | $T_0(5)$ | $T_0(6)$ | $T_0(7)$ | $T_0(8)$ | $T_0(9)$ | $T_0(10)$ | $T_0(11)$ | $T_0(12)$ |
|---|---|---|---|---|---|---|---|---|---|---|---|
| $P_1(1)$ | $P_1(2)$ | $P_1(3)$ | $P_1(4)$ | $P_1(5)$ | $P_1(6)$ | $P_1(7)$ | $P_1(8)$ | $P_1(9)$ | $P_1(10)$ | $P_1(11)$ | $P_1(12)$ |

801

(b) Type-B Template

| $T_0(1)$ | $T_0(2)$ | $T_0(3)$ | $T_0(4)$ | $T_0(5)$ | $T_0(6)$ | $T_0(7)$ | $T_0(8)$ | $T_0(9)$ | $T_0(10)$ | $T_0(11)$ | $T_0(12)$ |
|---|---|---|---|---|---|---|---|---|---|---|---|
| $P_1(12)$ | $P_1(11)$ | $P_1(10)$ | $P_1(9)$ | $P_1(8)$ | $P_1(7)$ | $P_1(6)$ | $P_1(5)$ | $P_1(4)$ | $P_1(3)$ | $P_1(2)$ | $P_1(1)$ |

801

(c) Type-C Template

| $T_0(1)$ | $T_0(2)$ | $T_0(3)$ | $T_0(4)$ | $T_0(5)$ | $T_0(6)$ | $T_0(7)$ | $T_0(8)$ | $T_0(9)$ | $T_0(10)$ | $T_0(11)$ | $T_0(12)$ |
|---|---|---|---|---|---|---|---|---|---|---|---|
| $P_1(2)$ | $P_1(1)$ | $P_1(4)$ | $P_1(3)$ | $P_1(6)$ | $P_1(5)$ | $P_1(8)$ | $P_1(7)$ | $P_1(10)$ | $P_1(9)$ | $P_1(12)$ | $P_1(11)$ |

801

(d) 8-Fiber Template (type-B)

| $T_0(1)$ | $T_0(2)$ | $T_0(3)$ | $T_0(4)$ | $T_0(5)$ | $T_0(6)$ | $T_0(7)$ | $T_0(8)$ | $T_0(9)$ | $T_0(10)$ | $T_0(11)$ | $T_0(12)$ |
|---|---|---|---|---|---|---|---|---|---|---|---|
| $P_1(12)$ | $P_1(11)$ | $P_1(10)$ | $P_1(9)$ | $-\infty$ | $-\infty$ | $-\infty$ | $-\infty$ | $P_1(4)$ | $P_1(3)$ | $P_1(2)$ | $P_1(1)$ |

801

(e) 10-Fiber Template (type-B)

| $T_0(1)$ | $T_0(2)$ | $T_0(3)$ | $T_0(4)$ | $T_0(5)$ | $T_0(6)$ | $T_0(7)$ | $T_0(8)$ | $T_0(9)$ | $T_0(10)$ | $T_0(11)$ | $T_0(12)$ |
|---|---|---|---|---|---|---|---|---|---|---|---|
| $-\infty$ | $P_1(11)$ | $P_1(10)$ | $P_1(9)$ | $P_1(8)$ | $P_1(7)$ | $P_1(6)$ | $P_1(5)$ | $P_1(4)$ | $P_1(3)$ | $P_1(2)$ | $-\infty$ |

801

(f) User-Defined*

| $T_0(m)$ | $T_0(m)$ | $T_0(m)$ | $T_0(m)$ | $T_0(m)$ | $T_0(m)$ | $T_0(m)$ | $T_0(m)$ | $T_0(m)$ | $T_0(m)$ | $T_0(m)$ | $T_0(m)$ |
|---|---|---|---|---|---|---|---|---|---|---|---|
| $P_1(1)$ | $P_1(2)$ | $P_1(3)$ | $P_1(4)$ | $P_1(5)$ | $P_1(6)$ | $P_1(7)$ | $P_1(8)$ | $P_1(9)$ | $P_1(10)$ | $P_1(11)$ | $P_1(12)$ |

**Fig. 8**

MPO Light Source

900

910

LS₁

L₁ — 902

⋮ ⋮

920

LSₙ

Lₙ

**Fig. 9**

Fig. 10

**Fig. 11**

EP 4 249 882 A1

**Fig. 12A**

Source

| P₀(1) | P₀(2) | P₀(3) | P₀(4) | P₀(5) | P₀(6) | P₀(7) | P₀(8) | P₀(9) | P₀(10) | P₀(11) | P₀(12) |
|-------|-------|-------|-------|-------|-------|-------|-------|-------|--------|--------|--------|
| -6dBm | -9dBm | -12dBm | -6dBm | -9dBm | -6dBm | -12dBm | -9dBm | -12dBm | -6dBm | -12dBm | -9dBm |

**Fig. 12B**

## Fig. 13A

MPO Light Source Output Power (Reference)

## Fig. 13B

Type-A Polarity Checking Template

## Fig. 13C

Type-B Polarity Checking Template

Type-C Polarity Checking Template

## Fig. 13D

Type-B MPO-8 Polarity Checking Template

## Fig. 13E

Type-B MPO-10 Polarity Checking Template

## Fig. 13F

**MPO Fiber Loss**

**Fig. 14A**

**Tested Powers vs. Reference Powers**

**Fig. 14B**

|  | Type-A | Type-B | Type-C | 8-Fiber (type-B) | 10-Fiber (type-B) |
|---|---|---|---|---|---|
| R | -0.6128 | 0.7826 | -0.3221 | -0.2172 | 0.2213 |

**Fig. 14C**

**Fig. 15A**

| $P_0(1)$ | $P_0(2)$ | $P_0(3)$ | $P_0(4)$ | $P_0(5)$ | $P_0(6)$ | $P_0(7)$ | $P_0(8)$ | $P_0(9)$ | $P_0(10)$ | $P_0(11)$ | $P_0(12)$ |
|---|---|---|---|---|---|---|---|---|---|---|---|
| -3dBm | -6dBm | -9dBm | -3dBm | -6dBm | -3dBm | -9dBm | -6dBm | -9dBm | -3dBm | -9dBm | -6dBm |

Source

**Fig. 15B**

**Fig. 16A**

EP 4 249 882 A1

34

1660

(a) Type-A Output Pattern/Template

| $F_2(1)/T_0(1)$ | $F_2(2)/T_0(2)$ | $F_2(3)/T_0(3)$ | $F_2(4)/T_0(4)$ | $F_2(5)/T_0(5)$ | $F_2(6)/T_0(6)$ | $F_2(7)/T_0(7)$ | $F_2(8)/T_0(8)$ | $F_2(9)/T_0(9)$ | $F_2(10)/T_0(10)$ | $F_2(11)/T_0(11)$ | $F_2(12)/T_0(12)$ |
|---|---|---|---|---|---|---|---|---|---|---|---|
| 3 | 2 | 1 | 3 | 2 | 3 | 1 | 2 | 1 | 3 | 1 | 2 |

(b) Type-B Output Pattern/Template

| $F_2(1)/T_0(1)$ | $F_2(2)/T_0(2)$ | $F_2(3)/T_0(3)$ | $F_2(4)/T_0(4)$ | $F_2(5)/T_0(5)$ | $F_2(6)/T_0(6)$ | $F_2(7)/T_0(7)$ | $F_2(8)/T_0(8)$ | $F_2(9)/T_0(9)$ | $F_2(10)/T_0(10)$ | $F_2(11)/T_0(11)$ | $F_2(12)/T_0(12)$ |
|---|---|---|---|---|---|---|---|---|---|---|---|
| 2 | 1 | 3 | 1 | 2 | 1 | 3 | 2 | 3 | 1 | 2 | 3 |

(c) Type-C Output Pattern/Template

| $F_2(1)/T_0(1)$ | $F_2(2)/T_0(2)$ | $F_2(3)/T_0(3)$ | $F_2(4)/T_0(4)$ | $F_2(5)/T_0(5)$ | $F_2(6)/T_0(6)$ | $F_2(7)/T_0(7)$ | $F_2(8)/T_0(8)$ | $F_2(9)/T_0(9)$ | $F_2(10)/T_0(10)$ | $F_2(11)/T_0(11)$ | $F_2(12)/T_0(12)$ |
|---|---|---|---|---|---|---|---|---|---|---|---|
| 2 | 3 | 3 | 1 | 3 | 2 | 2 | 1 | 3 | 1 | 2 | 1 |

(d) 8-Fiber Output Pattern/Template (type-B)

| $F_2(1)/T_0(1)$ | $F_2(2)/T_0(2)$ | $F_2(3)/T_0(3)$ | $F_2(4)/T_0(4)$ | $F_2(5)/T_0(5)$ | $F_2(6)/T_0(6)$ | $F_2(7)/T_0(7)$ | $F_2(8)/T_0(8)$ | $F_2(9)/T_0(9)$ | $F_2(10)/T_0(10)$ | $F_2(11)/T_0(11)$ | $F_2(12)/T_0(12)$ |
|---|---|---|---|---|---|---|---|---|---|---|---|
| 2 | 1 | 3 | 1 | 0 | 0 | 0 | 0 | 3 | 1 | 2 | 3 |

(e) 10-Fiber Output Pattern/Template (type-B)

| $F_2(1)/T_0(1)$ | $F_2(2)/T_0(2)$ | $F_2(3)/T_0(3)$ | $F_2(4)/T_0(4)$ | $F_2(5)/T_0(5)$ | $F_2(6)/T_0(6)$ | $F_2(7)/T_0(7)$ | $F_2(8)/T_0(8)$ | $F_2(9)/T_0(9)$ | $F_2(10)/T_0(10)$ | $F_2(11)/T_0(11)$ | $F_2(12)/T_0(12)$ |
|---|---|---|---|---|---|---|---|---|---|---|---|
| 0 | 1 | 3 | 1 | 2 | 1 | 3 | 2 | 3 | 1 | 2 | 0 |

**Fig. 16B**

EP 4 249 882 A1

EP 4 249 882 A1

1700

| | Type-A | Type-B | Type-C | 8-Fiber (type-B) | 10-Fiber (type-B) |
|---|---|---|---|---|---|
| R | -0.75 | 1 | 0.25 | 0.5196 | 0.4919 |

**Fig. 17**

1800

1805 - Transmitting light from a
light source

1820 - Adjusting a signal parameter
of the light

1825 - Generating a polarity pattern
template

1830 – Comparing an output
pattern of a cabling-under-test
(CUT) with a polarity pattern
template

1835 - Determining a correlation
coefficient

1844 - Identifying the highest
correlation coefficient to determine
the polarity of the CUT

1840 - Determining the polarity of
the CUT based at least on a best-fit
of the output pattern to the
polarity template

**Fig. 18A**

1800

1805 - Transmitting light from a light source

1820 - Adjusting a modulation frequency, a pulse, or an optical digital signal formation of the light

1825 - Generating a polarity pattern template

1812 - Obtaining a fiber digital signature of the CUT

1843 – Generating a numerical data pattern

1830 – Comparing the fiber digital signature pattern of the CUT with a polarity pattern template

1835 - Determining a correlation coefficient between the digital fiber signature pattern of the CUT and the polarity pattern template

1844 - Identifying the highest correlation coefficient to determine the polarity of the CUT

1840 - Determining the polarity of the CUT based at least on a best-fit of the fiber digital signature pattern to the polarity template

**Fig. 18B**

1800

1805 - Transmitting light from a light source

1810 - Obtaining a reference output power

1820 - Adjusting a power level of the light

1825 - Generating a polarity pattern template

1842 - Obtaining an output power of the cabling-under-test (CUT)

1830 – Comparing an output power pattern of a cabling-under-test (CUT) with a polarity pattern template

1835 - Determining a correlation coefficient between the obtained output power of the CUT and the polarity pattern template

1844 - Identifying the highest correlation coefficient to determine the polarity of the CUT

1840 - Determining the polarity of the CUT based at least on a best-fit of the output power pattern to the polarity template

**Fig. 18C**

1900

1840

1910 – Measuring reference power and output power of the CUT, and determining an optical insertion loss

# Fig. 19

**Fig. 20**

**Fig. 21**

Fig. 22

**Fig. 23**

650

652

656

654

658

2410

LS₁

2411

2450

PD

2402

2460

2400

12 11 10 9 8 7 6 5 4 3 2 1

2420

**Fig. 24**

Fig. 25

Fig. 26

Fig. 27

EP 4 249 882 A1

Europäisches
Patentamt

European
Patent Office

Office européen
des brevets

# EUROPEAN SEARCH REPORT

Application Number

EP 23 16 0944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | "Fibre optic communication system design guides – Part 15: Cable plant and link – Testing multi-fibre optic cable plant terminated with MPO connectors", IEC TR 61282-15:2017, IEC, 3, RUE DE VAREMBÉ, PO BOX 131, CH-1211 GENEVA 20, SWITZERLAND , 4 May 2017 (2017-05-04), pages 1-21, XP082040150, Retrieved from the Internet: URL:https://api.iec.ch/harmonized/publicat ions/download/202627 [retrieved on 2017-05-04] * paragraph [0005] – paragraph [0007] * | 1-15 | INV. G01M11/00 |
| A | WO 2020/112704 A1 (AFL TELECOMMUNICATIONS LLC [US]) 4 June 2020 (2020-06-04) * paragraph [0018] – paragraph [0025]; figures * | 1-15 | |
| Y | EP 3 495 797 A1 (EXFO INC [CA]) 12 June 2019 (2019-06-12) * paragraphs [0012], [0077] – paragraph [0080]; figures * | 1-15 | TECHNICAL FIELDS SEARCHED (IPC) G01M |

The present search report has been drawn up for all claims

| Place of search | Date of completion of the search | Examiner |
|---|---|---|
| The Hague | 23 August 2023 | Amroun, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 0944

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2023

| Patent document cited in search report | | Publication date | Patent family member(s) | | Publication date |
|---|---|---|---|---|---|
| WO 2020112704 | A1 | 04-06-2020 | CA | 3121013 A1 | 04-06-2020 |
| | | | EP | 3887792 A1 | 06-10-2021 |
| | | | US | 2022011194 A1 | 13-01-2022 |
| | | | WO | 2020112704 A1 | 04-06-2020 |
| EP 3495797 | A1 | 12-06-2019 | AU | 2018264068 A1 | 20-06-2019 |
| | | | CN | 109873670 A | 11-06-2019 |
| | | | EP | 3495797 A1 | 12-06-2019 |
| | | | US | 2019170610 A1 | 06-06-2019 |

EPO FORM P0459

For more details about this annex : see Official Journal of the European Patent Office, No. 12/82

**REFERENCES CITED IN THE DESCRIPTION**

**Patent documents cited in the description**

- US 63320761